(19) Europäisches Patentamt
European Patent Office
Office européen des brevets

(11) EP 4 467 591 A1

(12) EUROPEAN PATENT APPLICATION
published in accordance with Art. 153(4) EPC

(43) Date of publication:
**27.11.2024 Bulletin 2024/48**

(21) Application number: **23743241.4**

(22) Date of filing: **17.01.2023**

(51) International Patent Classification (IPC):
***C08G 64/30*** *(2006.01)* ***C08G 18/44*** *(2006.01)*
***B01J 31/26*** *(2006.01)*

(52) Cooperative Patent Classification (CPC):
**C08G 18/44; C08G 64/30;** B01J 31/26

(86) International application number:
**PCT/JP2023/001174**

(87) International publication number:
**WO 2023/140247 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2022 JP 2022005675**
**07.07.2022 JP 2022109959**

(71) Applicant: **Asahi Kasei Kabushiki Kaisha**
**Tokyo 1000006 (JP)**

(72) Inventor: **MASUBUCHI, Tetsuo**
**Tokyo 100-0006 (JP)**

(74) Representative: **Strehl Schübel-Hopf & Partner**
**Maximilianstrasse 54**
**80538 München (DE)**

(54) **METHOD FOR PRODUCING POLYCARBONATE DIOL, POLYCARBONATE DIOL, AND TRANSESTERIFICATION CATALYST**

(57) A method for producing a polycarbonate diol, including a step of obtaining a polycarbonate diol with polycondensation by transesterification reaction of a dihydroxy compound and a carbonate ester as starting material monomers in the presence of a transesterification catalyst, in which the transesterification catalyst includes a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.



Processed by Luminess, 75001 PARIS (FR)

## Description

### Technical Field

The present invention relates to a method for producing a polycarbonate diol, a polycarbonate diol and a transesterification catalyst, as well as a polyurethane in which the polycarbonate diol is used.

### Background Art

Polyurethane resins and polyurea resins have been conventionally used in a wide range of fields such as synthetic leather, artificial leather, adhesives, coating materials for furniture, and coating materials for automobiles. Polyethers and polyesters are used as polyol components to be reacted with isocyanates (see, for example, Patent Document 1 and Non Patent Document 1). However, requirements for resistance of resins, for example, heat resistance, weather resistance, hydrolysis resistance, fungal resistance, and oil resistance have been increasingly higher in recent years.

In order to address such high requirement performances, various polycarbonate diols are proposed as soft segments excellent in hydrolysis resistance, weather resistance, oxidation degradation resistance, heat resistance, and the like (see, for example, Patent Documents 2 to 5).

Transesterification catalysts are usually used in production of polycarbonate diols and polyesters. For example, metallic sodium is used as a catalyst in production of a copolymerized polycarbonate diol of diethyl carbonate with 1,6-hexanediol and 1,5-pentanediol (see, for example, Patent Document 6), and sodium ethoxide and/or magnesium acetate are/is used as catalyst(s) in a combination of diethyl carbonate with a diol such as 1,3-propanediol, 2-methyl-1,3-propanediol, or 1,3-butanediol (see, for example, Patent Document 7).

In addition, lead acetate or tetra-n-butyl titanate is used as a catalyst in production of a copolymerized polycarbonate diol of ethylene carbonate with diols such as 1,4-butanediol, 1,5-pentanediol, 1,6-hexanediol and 2-methyl-1,3-propanediol, and tetra-n-butyl titanate is used as a catalyst in production of a polycarbonate diol of ethylene carbonate with various alkylenediols, and oxyalkylenediols such as diethylene glycol and dibutylene glycol (see, for example, Patent Document 8).

Not only tetra-n-butyl titanate, but also dibutyl tin dilaurate, sodium acetate, lithium hydroxide, a tin powder or the like has been traditionally used a catalyst in a combination of ethylene carbonate with 1,6-hexanediol (see, for example, Patent Document 9).

Furthermore, magnesium acetate is used as a catalyst in production of a copolymerized polycarbonate diol of diphenyl carbonate with 1,6-hexanediol and neopentyl glycol (see, for example, Patent Document 10).

There has been recently disclosed, as a method for improving the color tone of a polycarbonate diol in milder conditions, a method for producing a polycarbonate diol by using, as a catalyst, a transesterification catalyst in which a salt of at least one metal selected from zinc and metals in Group 2 in the long-period type periodic table with acetylacetone (or a salt of such at least one metal with an acetylacetone derivative) is present (see, for example, Patent Document 11).

### List of Prior Art Documents

Patent Document

Patent Document 1: Japanese Patent Laid-Open No. 2000-95836
Patent Document 2: Japanese Patent Laid-Open No. 2001-123112
Patent Document 3: Japanese Patent Laid-Open No. H05-51428
Patent Document 4: Japanese Patent Laid-Open No. H06-49166
Patent Document 5: International Publication No. WO2002/070584
Patent Document 6: Japanese Patent Laid-Open No. H02-289616
Patent Document 7: Japanese Patent Laid-Open No. 2012-46659
Patent Document 8: International Publication No. WO2006/088152
Patent Document 9: Japanese Patent Laid-Open No. S51-144492
Patent Document 10: Japanese Patent Laid-Open No. 2013-010950
Patent Document 11: Japanese Patent Laid-Open No. 2020-125467

Non Patent Document

Non Patent Document 1: Katsuji Matsunaga (supervisor), 'Basic and Application of Polyurethane', pp. 96 to 106, CMC Publishing Co., Ltd., issued in November 2006

Summary of Invention

Problems to be Solved by Invention

Conventionally known techniques have required setting of high reaction temperatures and addition of many catalysts for the purpose of polycondensation reaction of various dihydroxy compounds different in reactivity, and have been liable to cause coloration and/or thermal degradation of polycarbonates and/or polyesters. Therefore, transesterification catalysts known in the art have room for improvement in terms of production of various polycarbonate diols and polyesters.

For example, use of strong bases such as alkali metals or alkaline earth metals, or alkoxides thereof as catalysts easily causes coloration of polycarbonate diols.

In addition, titanium compounds, if used as catalysts, are not sufficient in activity and therefore tend to cause a long time to be taken for production. A long reaction time promotes formation of undesirable ether groups and/or vinyl groups. These groups can cause losses in weather resistance and heat resistance of the resulting polyurethane in the case of use of polycarbonate diols and polyesters as starting materials for polyurethane, and therefore are not preferred as starting materials for polyurethane.

On the other hand, lead compounds and organotin compounds have been recently revealed to be harmful to humans and have an adverse effect on ecosystems. Therefore, these compounds are not preferred as components remaining in polycarbonate diols and polyesters.

Magnesium acetate, magnesium alkoxide and magnesium acetylacetone, when used as catalysts, are high in polymerization activity to provide an improvement in productivity, as compared with titanium compounds, but do not sufficiently provide such an improvement, and therefore have room for improvement in terms of coloration of the resulting polycarbonate diol and polyester and an enhancement in productivity thereof.

An object of the present invention is then to provide a method for efficiently (specifically, for example, under milder reaction conditions within a short time) producing a polycarbonate diol. Another object thereof is to provide a polycarbonate diol excellent in color tone, small in ether linkage and high in terminal primary hydroxyl group (OH) purity, and a polyurethane in which the polycarbonate diol is used and which is excellent in chemical resistance, heat resistance, and hydrolysis resistance. Another object of the present invention is to provide a highly active catalyst for efficiently (specifically, for example, under milder reaction conditions within a short time) producing a polycarbonate diol or a polyester.

Means for Solving Problems

The present inventor has made intensive studies in order to solve the problems, and as a result, has found that a polycarbonate diol or a polyester can be efficiently produced by use of at least two transesterification catalysts each containing a specified metal in production of such a polycarbonate diol or a polyester with polycondensation by transesterification reaction and thus the problems can be solved. The inventor has also found a polycarbonate diol excellent in color tone, small in ether linkage and high in terminal primary hydroxyl group (OH) purity, and a polyurethane in which the polycarbonate diol is used and which is excellent in chemical resistance, heat resistance and hydrolysis resistance.

Specifically, the gist of the present invention is as follows.

[1] A method for producing a polycarbonate diol comprising a step of obtaining a polycarbonate diol with polycondensation by transesterification reaction of a dihydroxy compound and a carbonate ester as starting material monomers in the presence of a transesterification catalyst, wherein
the transesterification catalyst comprises a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.

[2] The method for producing the polycarbonate diol according to [1], wherein the transesterification catalyst A1 corresponds to at least one metal complex represented by the following formula (1) and/or a hydrate thereof:

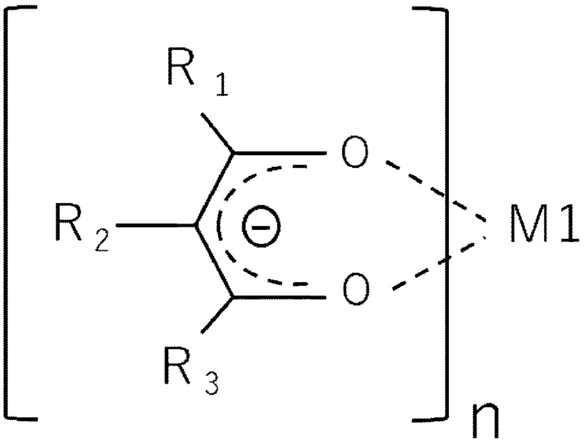

(1)

wherein $R_1$ and $R_3$ each independently represent a monovalent hydrocarbon group having 1 to 10 carbon atoms, the hydrocarbon groups of $R_1$ and $R_3$ are each optionally substituted with a halogen atom or each optionally have an oxygen atom, $R_2$ represents hydrogen, or a monovalent hydrocarbon group having 1 to 10 carbon atoms, the hydrocarbon group of $R_2$ is optionally substituted with a halogen atom or optionally has an oxygen atom, M1 represents at least one metal selected from the group consisting of metals in Group 6, Group 7, Group 8, Group 9, Group 10 and Group 11 in the long-period type periodic table, n is 1, 2 or 3, and the metal complex represented by the formula (1) is optionally an associated product of a plurality of such metal complexes.

[3] The method for producing the polycarbonate diol according to [1], wherein the transesterification catalyst A1 corresponds to a salt of at least one carboxylic acid represented by the following formula (2) and at least one metal (M1) selected from the group consisting of metals in Group 6, Group 7, Group 8, Group 9, Group 10 and Group 11 in the long-period type periodic table, and/or a hydrate thereof:

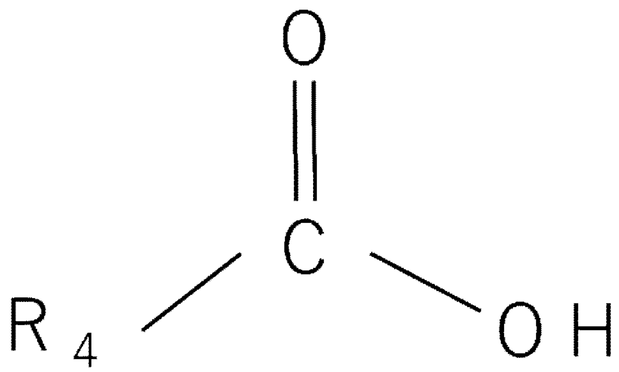

(2)

wherein $R_4$ represents a monovalent hydrocarbon group having 1 to 20 carbon atoms, and the hydrocarbon group of $R_4$ is optionally substituted with a halogen atom or optionally has an oxygen atom.

[4] The method for producing the polycarbonate diol according to any of [1] to [3], wherein the metal (M1) is at least one metal selected from the group consisting of molybdenum, manganese, iron, cobalt, nickel and copper.

[5] The method for producing the polycarbonate diol according to any of [1] to [4], wherein the metal (M1) is manganese.

[6] The method for producing the polycarbonate diol according to any of [1] to [5], wherein the transesterification catalyst A2 is an alcoholate of at least one alcohol represented by the following formula (3) and at least one metal (M2) selected from the group consisting of metals in Group 1 and Group 4 in the long-period type periodic table:

$$R_5\text{ - OH} \qquad (3)$$

wherein $R_5$ represents a monovalent hydrocarbon group having 1 to 20 carbon atoms, and the hydrocarbon group of $R_5$ is optionally substituted with a halogen atom or optionally has an oxygen atom.

[7] The method for producing the polycarbonate diol according to any of [1] to [6], wherein the metal (M2) is at least one metal selected from the group consisting of lithium, sodium, potassium, titanium, zirconium and hafnium.

[8] The method for producing the polycarbonate diol according to any of [1] to [7], wherein the metal (M2) is lithium.

[9] The method for producing the polycarbonate diol according to any of [1] to [8], wherein an amount of the

transesterification catalyst A1 is 0.5 ppm or more and 20 ppm or less in terms of the total amount of the metal (M1) based on the total amount of the whole dihydroxy compound and carbonate ester, and
an amount of the transesterification catalyst A2 is 0.25 ppm or more and 10 ppm or less in terms of the total amount of the metal (M2) based on the total amount of the whole dihydroxy compound and carbonate ester.
[10] The method for producing the polycarbonate diol according to any of [1] to [9], wherein the dihydroxy compound comprises at least one of an aliphatic dihydroxy compound and an alicyclic dihydroxy compound of any structure represented by the following formula (4):

$$HO\text{-}R_6\text{-}OH \qquad (4)$$

wherein $R_6$ represents a divalent aliphatic or alicyclic hydrocarbon group having 2 to 20 carbon atoms.
[11] The method for producing the polycarbonate diol according to any of [1] to [10], wherein the carbonate ester is at least one selected from the group consisting of alkylene carbonate, dialkyl carbonate and diaryl carbonate.
[12] A polycarbonate diol satisfying the following formula (A):

$$HO\text{-}R(OC{=}OOR)m\text{-}OH \qquad (A)$$

wherein R represents a divalent aliphatic hydrocarbon group or alicyclic hydrocarbon group having 2 to 20 carbon atoms, and m is an integer of 2 or more and 600 or less;

wherein the polycarbonate diol
has a number average molecular weight of 250 or more and 100000 or less,
contains at least one metal (M1) selected from the group consisting of metals in Group 6, Group 7, Group 8, Group 9, Group 10 and Group 11 in the long-period type periodic table in a total amount of 1 ppm or more and 25 ppm or less and
contains at least one metal (M2) selected from the group consisting of metals in Group 1 and Group 4 in the long-period type periodic table in a total amount of 0.5 ppm or more and 12.5 ppm or less,
has a Hazen color index measured according to JIS-K0071-1 (1998) of 50 or less,
has an amount of ether linkage of 5% by mol or less, and
has a terminal primary hydroxyl group (OH) purity of 97% or more.

[13] The polycarbonate diol according to [12], wherein the polycarbonate diol is a polycondensation product by transesterification reaction of a dihydroxy compound and a carbonate ester.
[14] The polycarbonate diol according to [12] or [13], wherein the metal (M1) is at least one metal selected from the group consisting of molybdenum, manganese, iron, cobalt, nickel and copper, and the metal (M2) is at least one metal selected from the group consisting of lithium, sodium, potassium, titanium, zirconium and hafnium.
[15] The polycarbonate diol according to any of [12] to [14], wherein the metal (M1) is manganese and the metal (M2) is lithium.
[16] A polyurethane comprising the polycarbonate diol according to any of [12] to [15].
[17] A transesterification catalyst comprising at least two transesterification catalysts of a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.
[18] The transesterification catalyst according to [17], wherein the transesterification catalyst A1 is at least one metal complex represented by the following formula (1) and/or a hydrate thereof:

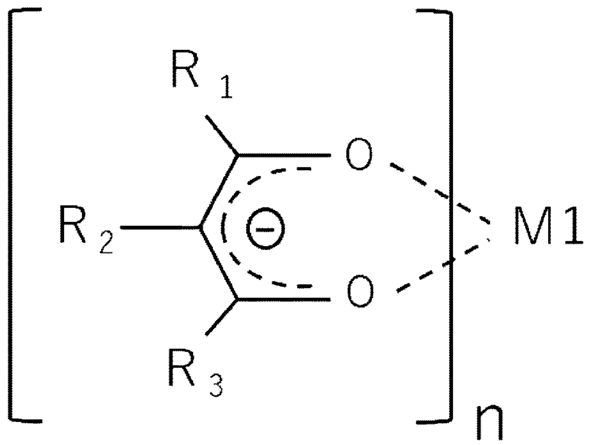

(1)

wherein $R_1$ and $R_3$ each independently represent a monovalent hydrocarbon group having 1 to 10 carbon atoms, the hydrocarbon groups of $R_1$ and $R_3$ are each optionally substituted with a halogen atom or each optionally have an oxygen atom, $R_2$ represents hydrogen, or a monovalent hydrocarbon group having 1 to 10 carbon atoms, the hydrocarbon group of $R_2$ is optionally substituted with a halogen atom or optionally has an oxygen atom, M1 represents at least one metal selected from the group consisting of metals in Group 6, Group 7, Group 8, Group 9, Group 10 and Group 11 in the long-period type periodic table, n is 1, 2 or 3, and the metal complex represented by the formula (1) is optionally an associated product of a plurality of such metal complexes.

[19] The transesterification catalyst according to [17], wherein the transesterification catalyst A1 corresponds to a salt of at least one carboxylic acid represented by the following formula (2) and at least one metal (M1) selected from the group consisting of metals in Group 6, Group 7, Group 8, Group 9, Group 10 and Group 11 in the long-period type periodic table, and/or a hydrate thereof:

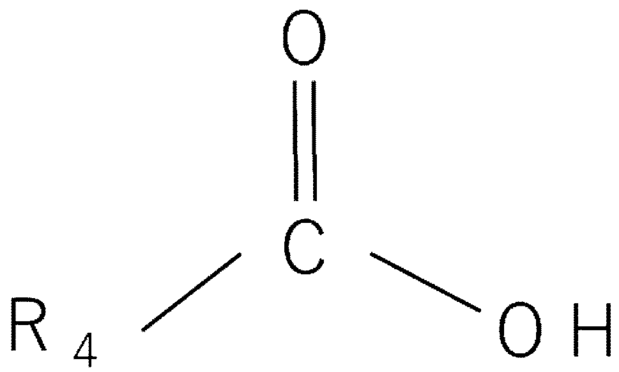

(2)

wherein $R_4$ represents a monovalent hydrocarbon group having 1 to 20 carbon atoms, and the hydrocarbon group of $R_4$ is optionally substituted with a halogen atom or optionally has an oxygen atom.

[20] The transesterification catalyst according to any of [17] to [19], wherein the metal (M1) is at least one metal selected from the group consisting of molybdenum, manganese, iron, cobalt, nickel and copper.

[21] The transesterification catalyst according to any of [17] to [19], wherein the metal (M1) is manganese.

[22] The transesterification catalyst according to any of [17] to [21], wherein the transesterification catalyst A2 is an alcoholate of at least one alcohol represented by the following formula (3) and at least one metal (M2) selected from the group consisting of metals in Group 1 and Group 4 in the long-period type periodic table:

$R_5$-OH (3)

wherein $R_5$ represents a monovalent hydrocarbon group having 1 to 20 carbon atoms, and the hydrocarbon group of $R_5$ is optionally substituted with a halogen atom or optionally has an oxygen atom.

[23] The transesterification catalyst according to any of [17] to [22], wherein the metal (M2) is at least one metal selected from the group consisting of lithium, sodium, potassium, titanium, zirconium and hafnium.

[24] The transesterification catalyst according to any of [17] to [22], wherein the metal (M2) is lithium.

Advantages of Invention

The method for producing a polycarbonate diol of the present invention can efficiently produce a polycarbonate diol or a polyester, for example, in milder conditions than those of a conventionally known technique. The present invention can provide a polycarbonate diol or a polyester excellent in color tone, small in ether linkage and high in terminal primary hydroxyl group (OH) purity, and a polyurethane in which the polycarbonate diol or the polyester is used and which is excellent in chemical resistance, heat resistance, and hydrolysis resistance.

Mode for Carrying Out Invention

Hereinafter, an embodiment (hereinafter, abbreviated as "the present embodiment".) for carrying out the present invention is described in detail. The present invention is not limited to the following embodiment, and can be variously modified and carried out within the gist thereof.

[1. Method for producing polycarbonate diol]

A method for producing a polycarbonate diol of the present embodiment includes a step of obtaining a polycarbonate diol with polycondensation by transesterification reaction of a dihydroxy compound and a carbonate ester as starting material monomers in the presence of a transesterification catalyst, wherein

the transesterification catalyst includes a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.

The method for producing a polycarbonate diol of the present embodiment can thus efficiently (specifically, for example, under milder reaction conditions within a short time) produce a polycarbonate diol by use of at least two transesterification catalysts each containing a specified metal.

<1-1. Starting material monomers>

A dihydroxy compound and a carbonate ester are used as starting material monomers in the method for producing a polycarbonate diol of the present embodiment.

<1-1-1. Dihydroxy compound>

Specific examples of the dihydroxy compound serving as a starting material monomer in the method for producing a polycarbonate diol of the present embodiment can include, but not particularly limited, linear compounds each having a dihydroxy terminal, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol and 1,20-eicosanediol; ether group-containing dihydroxy compounds such as diethylene glycol, triethylene glycol, tetraethylene glycol, polypropylene glycol and polytetramethylene glycol; thioether diols such as bishydroxyethyl thioether; 2,2-dialkyl-substituted 1,3-propanediols (hereinafter, sometimes designated as "2,2-dialkyl-1,3-propanediols".) such as 2-ethyl-1,6-hexanediol, 2-methyl-1,3-propanediol, 3-methyl-1,5-pentanediol, 2-methyl-1,8-octanediol and 2,4-diethyl-1,5-pentanediol, 2,2-dimethyl-1,3-propanediol (hereinafter, sometimes abbreviated as "neopentyl glycol"), 2-ethyl-2-butyl-1,3-propanediol, 2,2-diethyl-1,3-propanediol, and 2-pentyl-2-propyl-1,3-propanediol; tetraalkyl-substituted alkylenediols such as 2,2,4,4-tetramethyl-1,5-pentanediol and 2,2,9,9-tetramethyl-1,10-decanediol, and cyclic group-containing dihydroxy compounds such as 3,9-bis(1,1-dimethyl-2-hydroxyethyl)-2,4,8,10-tetraoxaspiro[5.5]undecane; branched dihydroxy compounds such as 2,2-diphenyl-1,3-propanediol, 2,2-divinyl-1,3-propanediol, 2,2-diethynyl-1,3-propanediol, 2,2-dimethoxy-1,3-propanediol, bis(2-hydroxy-1,1-dimethylethyl)ether, bis(2-hydroxy-1,1-dimethylethyl)thioether and 2,2,4,4-tetramethyl-3-cyano-1,5-pentanediol; dihydroxy compounds each having a cyclic group in its molecule, such as 1,3-cyclohexanediol, 1,4-cyclohexanediol, 1,4-cyclohexane dimethanol, 4,4-dicyclohexyldimethylmethanediol, 2,2'-bis(4-hydroxycyclohexyl)propane, 1,4-dihydroxyethylcyclohexane, isosorbide, spiroglycol, 2,5-bis(hydroxymethyl)tetrahydrofuran, 4,4'-isopropylidenedicyclohexanol and 4,4'-isopropylidenebis(2,2'-hydroxyethoxycyclohexane) ; aromatic ring-containing dihydroxy compounds such as 9,9-bis(4-(2-hydroxyethoxy)phenyl)fluorene and 9,9-bis(4-(2-hydroxyethoxy-2-methyl)phenyl)fluorene, nitrogen-containing dihydroxy compounds such as diethanolamine and N-methyldiethanolamine; as well as sulfur-containing dihydroxy compounds such as bis(hydroxyethyl)sulfide; and aromatic phenols such as 2,2-bis(4-hydroxyphenyl)propane[= bisphenol A], 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxy-diphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl)sulfone, 2,4'-dihydroxydiphenylsulfone, bis(4-hydroxyphenyl)sulfide, 4,4'-dihydroxydiphenyl ether, 4,4'-dihydroxy-3,3'-dichlorodiphenyl ether, 9,9-bis(4-hydroxyphenyl)fluorene and 9,9-bis(4-hydroxy-2-methylphenyl)fluorene.

In particular, the dihydroxy compound is preferably at least one compound selected from the group consisting of an aliphatic dihydroxy compound and an alicyclic dihydroxy compound, more preferably at least one compound selected from the group consisting of an aliphatic dihydroxy compound and an alicyclic dihydroxy compound represented by the following formula (4), from the viewpoint of weather resistance of a polyurethane obtained with the polycarbonate diol of the present embodiment:

$$HO\text{-}R_6\text{-}OH \qquad (4)$$

wherein $R_6$ represents a divalent aliphatic or alicyclic hydrocarbon group having 2 to 20 carbon atoms.

Among such dihydroxy compounds, the aliphatic dihydroxy compound is particularly preferably 1,3-propanediol, 1,4-butanediol, 1,5-pentanediol, 1,6-hexanediol, 1,9-nonanediol, 1,10-decanediol, neopentyl glycol, 2-methyl-1,3-propanediol, 3-methyl-1,5pentanediol, or 2-methyl-1,8-octanediol, and the alicyclic dihydroxy compound is particularly preferably 1,4-cyclohexane dimethanol or tricyclodecane dimethanol.

These dihydroxy compounds may be used singly or in combinations of two or more kinds thereof depending on requirement performances of the resulting polycarbonate diol, and a copolymerized polycarbonate diol is preferred which is obtained by combining a plurality of these dihydroxy compounds. The copolymerized polycarbonate diol not only is generally inhibited from being crystallized, and is higher in fluidity than a homo-polycarbonate diol and is excellent in operation ability when processed into a polyurethane, but also can impart flexibility and texture to a polyurethane.

For example, in the case of use of two kinds of such dihydroxy compounds, the compositional ratio in copolymerization is preferably set so that 5% by mol or more, preferably 10% by mol or more, more preferably 20% by mol or more, further preferably 30% by mol or more of each of the dihydroxy compounds is used based on the total of the dihydroxy compounds.

In general, copolymerization of dihydroxy compounds different in molecular structure may cause heterogeneous polymerization reaction or inhibition of polymerization due to the difference in reactivity, but the present embodiment in which a specified transesterification catalyst described below is used can easily provide a copolymerized polycarbonate diol.

<1-1-2. Carbonate ester>

The carbonate ester usable as a starting material monomer in the method for producing a polycarbonate diol of the present embodiment is not limited as long as the effects of the present invention are not impaired, and examples thereof include dialkyl carbonate, diaryl carbonate, or alkylene carbonate.

Specific examples of the dialkyl carbonate as the carbonate ester usable in production of the polycarbonate diol of the present embodiment include, but not particularly limited, dimethyl carbonate, diethyl carbonate, dibutyl carbonate, dicyclohexyl carbonate, diisobutyl carbonate, ethyl-n-butyl carbonate, and ethyl isobutyl carbonate.

Examples of the diaryl carbonate include, but not particularly limited, diphenyl carbonate, ditolyl carbonate, bis(chlorophenyl)carbonate, and di-m-cresyl carbonate.

Examples of the alkylene carbonate include, but not particularly limited, ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, 2,4-pentylene carbonate, and neopentyl carbonate.

These may be used singly or in combinations of two or more kinds thereof.

Among these carbonate esters, dimethyl carbonate, diethyl carbonate, ethylene carbonate, and diphenyl carbonate are particularly preferred which are inexpensively available as industrial starting materials, are good in reactivity, and cause a small amount of alcohols as by-products.

<1-1-3. Proportions of starting material monomers used>

The amount of the carbonate ester used in the method for producing a polycarbonate diol of the present embodiment is needed to be appropriately changed depending on an objective molecular weight of the polycarbonate diol, and is not particularly limited, and the lower limit is usually preferably 0.5, more preferably 0.7, further preferably 0.8, and the upper limit is usually 1.5, preferably 1.3, more preferably 1.2, on the molar ratio based on 1 mol in total of these dihydroxy compounds. When the amount of the carbonate ester used is equal to or less than the upper limit, the proportion of one in which the terminal group of the resulting polycarbonate diol is not a hydroxyl group can be suppressed, or the

polycarbonate diol of the present embodiment, in which the molecular weight is within a predetermined range, tends to be able to be produced, and when the amount is equal to or more than the lower limit, polymerization tends to progress until a predetermined molecular weight is achieved.

<1-2. Transesterification catalyst>

The transesterification catalyst used in the present embodiment includes at least two transesterification catalysts of a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.

<1-2-1. Transesterification catalyst A1 containing at least one metal (M1) selected from group consisting of metals in Group 6, Group 7, Group 8, Group 9, Group 10 and Group 11 in long-period type periodic table>

One mode of the transesterification catalyst A1 containing at least one metal (M1) selected from the group consisting of metals in Group 6, Group 7, Group 8, Group 9, Group 10 and Group 11 in the long-period type periodic table is preferably at least one metal complex represented by the following formula (1) and/or a hydrate thereof:

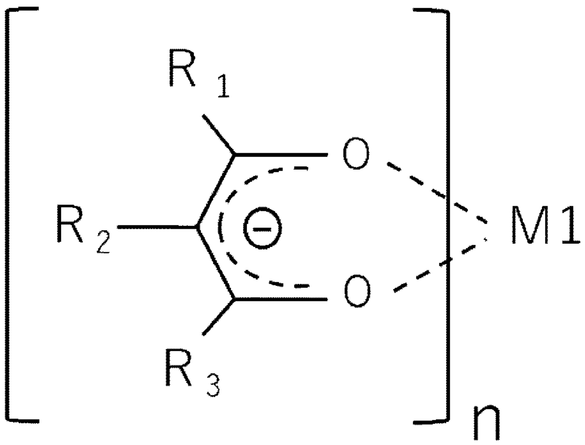

(1)

wherein $R_1$ and $R_3$ each independently represent a monovalent hydrocarbon group having 1 to 10 carbon atoms, the hydrocarbon groups of $R_1$ and $R_3$ are each optionally substituted with a halogen atom or each optionally have an oxygen atom, $R_2$ represents hydrogen, or a monovalent hydrocarbon group having 1 to 10 carbon atoms, the hydrocarbon group of $R_2$ is optionally substituted with a halogen atom or optionally has an oxygen atom, M1 represents at least one metal selected from the group consisting of metals in Group 6, Group 7, Group 8, Group 9, Group 10 and Group 11 in the long-period type periodic table, n is 1, 2 or 3, and the metal complex represented by the formula (1) is optionally an associated product of a plurality of such metal complexes.

A ligand to the metal in the metal complex represented by the formula (1) is an acetylacetone analog, and can be represented as a form in which a negative ion is not localized, as represented by the following formula (7), or can also be represented again as a form in which three organic anions are in an equilibrium state, as represented by the following formula (8):

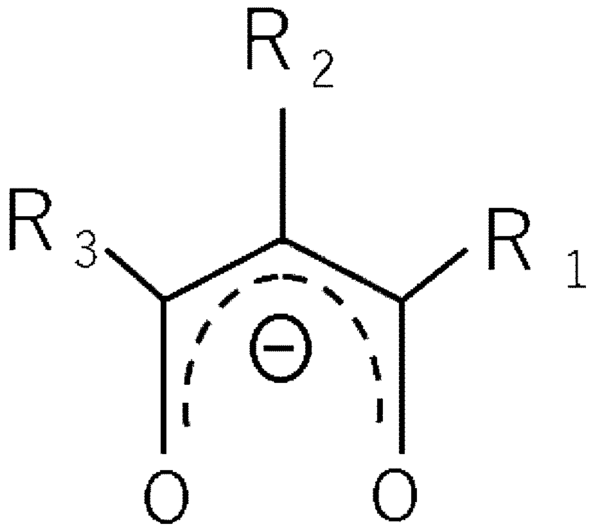

(7)

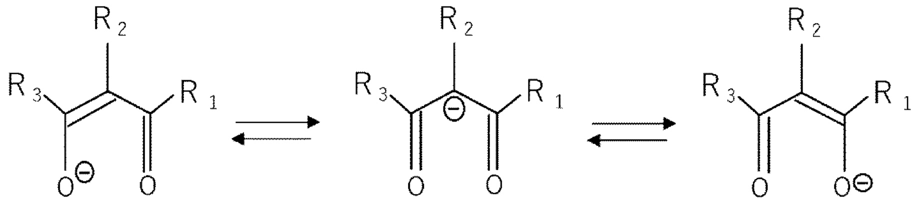

(8)

wherein $R_1$ and $R_3$ each independently represent a monovalent hydrocarbon group having 1 to 10 carbon atoms, the hydrocarbon groups of $R_1$ and $R_3$ are each optionally substituted with a halogen atom or each optionally have an oxygen atom, $R_2$ represents hydrogen, or a monovalent hydrocarbon group having 1 to 10 carbon atoms, and the hydrocarbon group of $R_2$ is optionally substituted with a halogen atom or optionally has an oxygen atom.

Examples of the method for preparing the transesterification catalyst represented by the formula (1) include a method for preparing the transesterification catalyst represented by the formula (1) by allowing a metal halide and an acetylacetone analog to act in the presence of a base, as represented by the following formula (9), and a method for preparing the transesterification catalyst represented by the formula (1) by exchange between a metal alkoxide and an acetylacetone analog, as represented by the following formula (10), but not limited thereto:

$$M1Xn + R_1COCHR_2COR_3 \xrightarrow{\text{base}} M1(R_1COCR_2COR_3)_n + nHX \quad (9)$$

$$M1(OR_8)_n + R_1COCHR_2COR_3 \longrightarrow M1(R_1COCR_2COR_3)_n + nR_8OH \quad (10)$$

wherein $R_1$, $R_2$, $R_3$, M1 and n are as defined in the formula (1), X represents any halogen atom, and $R_8$ represents any hydrocarbon group.

The transesterification catalyst represented by the formula (1) can be used accessorily in combination with a transition metal compound, or a basic compound such as a basic boron compound, a basic phosphorus compound, a basic ammonium compound, or an amine-based compound.

Specific examples of $R_1$ and $R_3$ in the formula (1) include, but not particularly limited, a methyl group, an ethyl group, a n-propyl group, an isopropyl group, a n-butyl group, an isobutyl group, a sec-butyl group, a tert-butyl group, a pentyl group, a neopentyl group, a hexyl group, a cyclohexyl group, a phenyl group, a benzyl group, a monofluoromethyl group, a difluoromethyl group, a trifluoromethyl group, a monochloromethyl group, a dichloromethyl group, and a trichloromethyl group, and among them, in particular, a methyl group, an ethyl group, a n-propyl group, an isopropyl group, a n-butyl group, an isobutyl group, a sec-butyl group, a tert-butyl group, a phenyl group, a benzyl group, a trifluoromethyl group, and a trichloromethyl group are preferred. Here, $R_1$ and $R_3$ may be the same as or different from each other.

Specific examples of $R_2$ include, but not particularly limited, hydrogen, a methyl group, an ethyl group, a n-propyl group, an isopropyl group, a n-butyl group, an isobutyl group, a sec-butyl group, a tert-butyl group, a pentyl group, a neopentyl group, a hexyl group, a cyclohexyl group, a phenyl group, a benzyl group, a monofluoromethyl group, a difluoromethyl group, a trifluoromethyl group, a monochloromethyl group, a dichloromethyl group, a trichloromethyl group,

a fluorine atom, a chlorine atom, a bromine atom, and an iodine atom, and among them, hydrogen, a methyl group, an ethyl group, a n-propyl group, an isopropyl group, a n-butyl group, an isobutyl group, a sec-butyl group, and a tert-butyl group are preferred, and hydrogen is particularly preferred.

The metal (M1) selected from the group consisting of Group 6, Group 7, Group 8, Group 9, Group 10 and Group 11 in the long-period type periodic table is not particularly limited, molybdenum, manganese, iron, cobalt, nickel and copper are preferred from the viewpoint of catalyst activity, and among them, manganese is particularly preferred.

An organometal complex with such an acetylacetone analog, used in the transesterification catalyst of the present embodiment, can also be used in the form of a hydrate.

Another form of the transesterification catalyst A1 containing at least one metal (M1) selected from the group consisting of metals in Group 6, Group 7, Group 8, Group 9, Group 10 and Group 11 in the long-period type periodic table is preferably a salt of at least one carboxylic acid represented by the following formula (2) and at least one metal (M1) selected from the group consisting of metals in Group 6, Group 7, Group 8, Group 9, Group 10 and Group 11 in the long-period type periodic table, and/or a hydrate thereof:

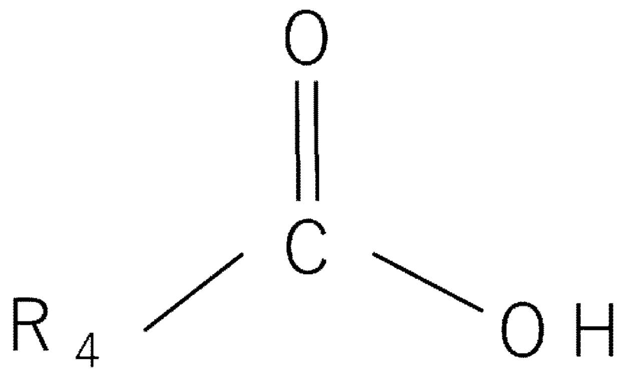

(2)

wherein $R_4$ represents a monovalent hydrocarbon group having 1 to 20 carbon atoms, and the hydrocarbon group of $R_4$ is optionally substituted with a halogen atom or optionally has an oxygen atom.

Examples of the carboxylic acid include formic acid, acetic acid, propionic acid, butyric acid, valeric acid, caproic acid, enanthic acid, caprylic acid, palmitic acid, margaric acid, and stearic acid, and among them, acetic acid, propionic acid, and butyric acid are preferred, and acetic acid is particularly preferred.

The metal (M1) selected from the group consisting of Group 6, Group 7, Group 8, Group 9, Group 10 and Group 11 in the long-period type periodic table is not particularly limited, molybdenum, manganese, iron, cobalt, nickel and copper are preferred from the viewpoint of catalyst activity, and among them, manganese is particularly preferred.

The salt of such a carboxylic acid, used in the transesterification catalyst of the present embodiment, can also be used in the form of a hydrate.

<1-2-2. Transesterification catalyst A2 containing at least one metal (M2) selected from group consisting of metals in Group 1 and Group 4 in long-period type periodic table>

The transesterification catalyst used in the present embodiment includes at least two transesterification catalysts of the above transesterification catalyst A1 and a transesterification catalyst A2 containing at least one metal (M2) selected from the group consisting of metals in Group 1 and Group 4 in the long-period type periodic table.

Examples of the metals in Group 1 in the long-period type periodic table include, but not particularly limited, lithium, sodium, potassium, rubidium, cesium, and francium. In particular, lithium, sodium, and potassium are high in catalyst activity and thus preferred. Lithium is particularly preferred which is particularly high in activity and which allows a polycarbonate diol produced to be small in amount of ether linkage.

Examples of the metals in Group 4 in the long-period type periodic table include, but not particularly limited, titanium, zirconium, and hafnium. In particular, titanium is particularly preferred which is high in activity and which allows a polycarbonate diol produced to be small in amount of ether linkage.

Examples of the mode of the transesterification catalyst A2 containing at least one metal (M2) selected from the group consisting of metals in Group 1 and Group 4 in the long-period type periodic table include, but not particularly limited, a salt with an inorganic acid, a salt with an organic acid, alcoholates of various alcohols, and hydroxides such as lithium hydroxide, sodium hydroxide, potassium hydroxide and titanium hydroxide.

In particular, an alcoholate of at least one alcohol represented by the following formula (3) and at least one metal (M2) selected from the group consisting of metals in Group 1 and Group 4 in the long-period type periodic table is preferred because of being high in catalyst activity and causing less coloration:

$R_5$-OH (3)

wherein $R_5$ represents a monovalent hydrocarbon group having 1 to 20 carbon atoms, and the hydrocarbon group of $R_5$ is optionally substituted with a halogen atom or optionally has an oxygen atom.

Examples of the alcoholate of at least one alcohol and any metal in Group 1 in the long-period type periodic table, represented by the formula (3), include, but not particularly limited, lithium methylate (lithium methoxide), lithium ethylate (lithium ethoxide), lithium propoxide, lithium butoxide, sodium methylate (sodium methoxide), sodium ethylate (sodium ethoxide), sodium propoxide, sodium butoxide, potassium methylate (potassium methoxide), potassium ethylate (potassium ethoxide), potassium propoxide, potassium butoxide, rubidium methoxide, rubidium ethoxide, cesium methoxide, and cesium ethoxide. Among these alcoholate, lithium methylate, lithium ethylate, sodium methylate, and sodium ethylate are preferred which each are high in catalyst activity and allow a polycarbonate diol produced to be small in amount of ether linkage and less colored, and lithium methylate and lithium ethylate are particularly preferred.

Examples of the alcoholate of at least one alcohol and any metal in Group 4 in the long-period type periodic table, represented by the formula (3), include, but not particularly limited, tetraisopropoxy titanium, tetra-n-butoxy titanium, tetra-n-butoxy zirconium, tetra-n-butoxy hafnium, tetra-t-butoxy zirconium, and tetra-t-butoxy hafnium. Among these alcoholates, tetraisopropoxy titanium and tetra-n-butoxy titanium are preferred which each are high in catalyst activity and allow a polycarbonate diol produced to be small in amount of ether linkage and less colored.

The transesterification catalyst used in the present embodiment includes at least two transesterification catalysts of the transesterification catalyst A1 containing at least one metal (M1) selected from the group consisting of metals in Group 6, Group 7, Group 8, Group 9, Group 10 and Group 11 in the long-period type periodic table, and the transesterification catalyst A2 containing at least one metal (M2) selected from the group consisting of metals in Group 1 and Group 4 in the long-period type periodic table.

The transesterification catalyst A1 and the transesterification catalyst A2 can be used in combination, rather than single use of the transesterification catalyst A1 or the transesterification catalyst A2, thereby imparting higher catalyst activity, for example, efficiently producing a polycarbonate diol.

A mechanism of exertion of such an effect, although is not clear, is presumed by the present inventor to be due to a reaction mechanism represented by the following formula (13). First, the transesterification catalyst A1 containing at least one metal (M1) selected from the group consisting of metals in Group 6, Group 7, Group 8, Group 9, Group 10 and Group 11 in the long-period type periodic table is coordinated as Lewis acid to carbonyl oxygen of a carbonate group. As a result, cationicity of carbonyl carbon is increased and transesterification reaction is activated. On the other hand, the transesterification catalyst A2 containing the at least one metal M2 selected from the group consisting of metals in Group 1 and Group 4 in the long-period type periodic table is considered to allow oxygen of alcohol to be anionic, promoting reaction with activated carbonyl carbon.

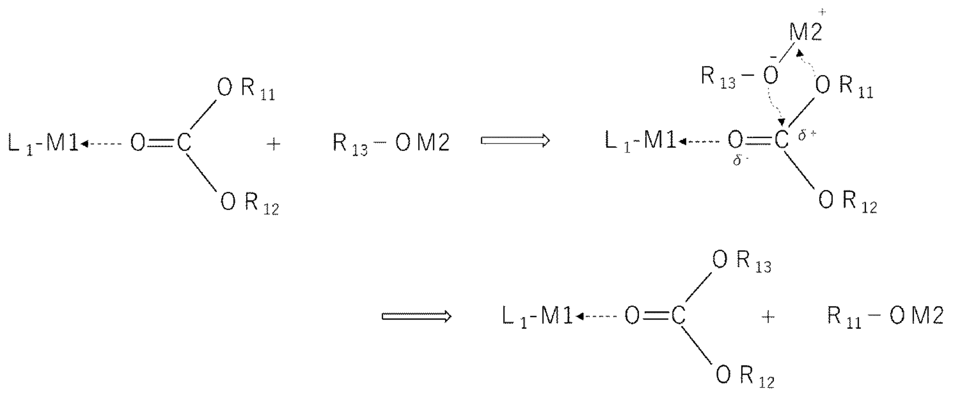

(13)

In the formula, M1 represents at least one metal selected from the group consisting of metals in Group 6, Group 7, Group 8, Group 9, Group 10 and Group 11 in the long-period type periodic table, M2 represents at least one metal selected from the group consisting of metals in Group 1 and Group 4 in the long-period type periodic table, $R_{11}$, $R_{12}$, and $R_{13}$ each represent any hydrocarbon group, and $L_1$ represents any ligand (optionally represents a plurality of ligands).

<Method of using catalyst>

The method of using the transesterification catalyst of the present embodiment is not particularly limited, and when the transesterification catalyst is used for polycarbonate diol production, examples of the method usually include a method including subjecting the dihydroxy compound and the carbonate ester used as starting material monomers to polycondensation with transesterification reaction by addition of the transesterification catalyst of the present embodiment. When the transesterification catalyst of the present embodiment is used for polyester production, examples of the method usually include a method including subjecting the dihydroxy compound and a dibasic acid such as adipic acid or phthalic acid and/or a methyl ester or ethyl ester compound thereof to polycondensation with transesterification reaction by addition of the transesterification catalyst of the present embodiment. The transesterification catalyst of the present embodiment can be used to efficiently (specifically, for example, under milder reaction conditions within a short time) produce, for example, a polycarbonate diol or a polyester.

A specific method of using the transesterification catalyst of the present embodiment, with polycarbonate diol production as an example, is as described above.

The amount of the transesterification catalyst used in the present embodiment is as follows. The amount of the transesterification catalyst A1 is preferably 0.5 ppm or more and 20 ppm or less, more preferably 1 ppm or more and 10 ppm or less, further preferably 2 ppm or more and 7 ppm or less in terms of the total amount of the metal (M1) based on the total amount of the whole dihydroxy compound and carbonate ester, and the amount of the transesterification catalyst A2 is preferably 0.25 ppm or more and 10 ppm or less, more preferably 0.5 ppm or more and 5 ppm or less, further preferably 1 ppm or more and 3 ppm or less in terms of the total amount of the metal (M2) based on the total amount of the whole dihydroxy compound and carbonate ester.

When the amount of the transesterification catalyst A1 is 0.5 ppm or more in terms of the total amount of the metal (M1), the reaction rate of transesterification tends to be higher. When the amount of the transesterification catalyst is 20 ppm or less in terms of the total amount of the metal (M1), the resulting polycarbonate diol can be inhibited from being colored, and when the polycarbonate diol is used as a starting material for urethane, urethanization reaction tends to be stabilized and the resulting urethane tends to be improved in color tone and enhanced in heat resistance.

When the amount of the transesterification catalyst A2 is 0.25 ppm or more in terms of the total amount of the metal (M2), the reaction rate of transesterification tends to be higher. When the amount of the transesterification catalyst is 10 ppm or less in terms of the total amount of the metal (M2), the resulting polycarbonate diol can be inhibited from being colored and is smaller in ether linkage, and when the polycarbonate diol is used as a starting material for urethane, urethanization reaction tends to be stabilized and the resulting urethane tends to be improved in color tone and enhanced in heat resistance.

<1-3. Method for producing polycarbonate diol>

In the present embodiment, a polycarbonate diol is produced by transesterification of one or a plurality of the above dihydroxy compounds and one or two or more of the above carbonate esters, in the presence of the at least two transesterification catalysts A1 and A2.

<1-3-1. Reaction conditions and the like>

The method for loading starting materials for the reaction is not particularly restricted, and can be freely selected from, for example, a method including loading the entire amount of one or a plurality of such dihydroxy compounds, the carbonate ester, and the catalyst at the same time and subjecting them to reaction, a method including first loading, warming and melting the carbonate ester and thereafter adding a dihydroxy compound and the catalyst in a case where the carbonate ester is a solid, and a method including first loading and melting the dihydroxy compound and then adding the carbonate ester and the catalyst thereto in contrast in a case where the dihydroxy compound is a solid.

The reaction temperature adopted in transesterification reaction can be any temperature as long as such any temperature is a temperature providing a practical reaction rate. The temperature is not particularly limited, and the lower limit is preferably 80°C, more preferably 110°C, further preferably 130°C. The upper limit of the reaction temperature is preferably 220°C, more preferably 200°C, further preferably 180°C, particularly preferably 170°C. When the reaction temperature is equal to or more than the lower limit, transesterification reaction tends to progress at a practical rate. When the reaction temperature is equal to or less than the upper limit, the resulting polycarbonate diol can be inhibited from being colored, resulting in a tendency to suppress generation of ether linkage or enhance the quality, for example, improve the haze.

In particular, the method for producing a polycarbonate diol of the present embodiment can efficiently provide a polycarbonate diol within a short time even at a low temperature of, for example, 160°C or less (preferably 150°C or less) under mild reaction conditions, by use of at least two transesterification catalysts A1 and A2 each containing a specified metal.

While reaction can also be performed at normal pressure, transesterification reaction is equilibrium reaction and a monohydroxy compound or dihydroxy compound produced can be distilled off out of the system to bias the reaction to the production system. Accordingly, the reaction is usually preferably performed in the latter part thereof with such a monohydroxy compound or dihydroxy compound being distilled off under a reduced pressure condition adopted. Alternatively, the reaction can also be performed in the middle thereof with such a monohydroxy compound or dihydroxy

compound produced being distilled off at a pressure being gradually reduced. When the pressure is being gradually reduced in the middle of the reaction, a low-boiling point unreacted monomer can be inhibited from being volatilized, not only to result in an enhancement in yield, but also to result in a tendency to provide a polycarbonate diol having a predetermined molecular weight, or provide a polycarbonate diol having a predetermined compositional ratio in copolymerization in the case of copolymerization.

The pressure in the reaction is appropriately selected depending on the type of a carbonate ester-derived alcohol to be distilled out, and, for example, when the alcohol to be distilled out is an alcohol having a relatively low boiling point, such as methanol, a preferred pressure in a reactor is 5 kPa to normal pressure, more preferably 7 kPa to 15 kPa. When the alcohol to be distilled out is an alcohol having a relatively high boiling point, such as ethylene glycol, a preferred pressure in a reactor is 1 to 10 kPa, more preferably 3 kPa to 7 kPa.

Furthermore, in order to prevent the starting materials from being distilled off in the early phase of the reaction, the reactor can also be provided with a rectification column having a number of theoretical stages of 10 stages or more, preferably 15 stages or more, further preferably 20 stages or more, thereby efficiently separating and distilling off a monohydroxy compound or a dihydroxy compound produced from a carbonate ester by the reaction, with refluxing and separating the carbonate ester and the dihydroxy compound as the starting materials which are azeotropic. Such a case is preferred because the ratio between the amounts of test agents can be precisely adapted without loss of any starting material monomers loaded.

The reaction is usually preferably performed at an increased degree of pressure reduction with switching to simple distillation in the end phase of the reaction because a monohydroxy compound or a dihydroxy compound as a by-product, such as alcohol and diol, and phenol, the remaining monomer such as the carbonate ester, and furthermore cyclic carbonate (cyclic oligomer) capable of causing clouding can be efficiently distilled off.

The reaction pressure at the end of the reaction here is not particularly limited, and the upper limit is usually preferably 5 kPa, more preferably 2 kPa, further preferably 1 kPa or less. The reaction can also be performed with a small amount of an inert gas such as nitrogen, argon, or helium being allowed to pass in order to effectively distill off such a low-boiling point content.

In the case of use of low-boiling point carbonate ester and dihydroxy compound in transesterification reaction, a method can also be adopted in which the reaction is performed around the boiling points of the carbonate ester and the dihydroxy compound in the early phase of the reaction and the temperature is gradually raised according to progress of the reaction to allow the reaction to further progress. Such a case is preferred because the unreacted carbonate ester and dihydroxy compound can be prevented from being distilled off in the early phase of the reaction.

<1-3-2. Polymerization reactor>

While polymerization reaction (polycondensation reaction) can be performed in a batch manner or in a continuous manner, such reaction is more excellently performed in a continuous manner in terms of stability of quality such as the molecular weight of a product. The apparatus used may be in any form of tank, tube and column types, and a known polymerization tank or the like equipped with various stirring blades can be used. The atmosphere during temperature rise of the apparatus is not particularly restricted, and the reaction is preferably performed in an inert gas such as a nitrogen gas under normal pressure or reduced pressure from the viewpoint of the quality of a product.

<1-3-3. Reaction time>

While the time necessary for the transesterification reaction (polymerization reaction or polycondensation reaction) in the method for producing a polycarbonate diol of the present embodiment significantly differs depending on the types and amounts of use of the dihydroxy compound, the carbonate ester, and the transesterification catalyst used and therefore cannot be generally prescribed, the reaction time necessary for achieving a predetermined molecular weight is usually preferably 20 hours or less, more preferably 10 hours or less, further preferably 5 hours or less.

<1-3-4. Deactivation of catalyst>

As described above, when the transesterification catalyst is used in the transesterification reaction, the transesterification catalyst or its residue may usually remain in the resulting polycarbonate diol not to allow for control of polyurethanization reaction being performed. In order to suppress the influence of the remaining catalyst, a catalyst deactivator, for example, a phosphorus-based or sulfur-based compound which is acidic or is decomposed and then made acidic may be added in an almost equimolar amount to that of the transesterification catalyst used. Furthermore, a heating treatment described below can be conducted to efficiently deactivate the transesterification catalyst. Such deactivation can decrease color formation derived from the transesterification catalyst, and the polycarbonate diol can achieve a Hazen color index of preferably 50 or less, more preferably 30 or less, as measured according to JIS-K0071-1 (1998).

The catalyst deactivator can be added to suppress coloration and the changes in physical properties, which are caused due to the changes in terminal structures and backbones of the polycarbonate diol and the remaining catalyst during storage and handling of the resulting polycarbonate diol composition at a high temperature for a long time.

Examples of a compound (hereinafter, sometimes referred to as "catalyst deactivator") used for deactivation of the transesterification catalyst include, but not particularly limited, inorganic phosphoric acids such as phosphoric acid and phosphorus acid, organic phosphate esters such as monobutyl phosphate, dibutyl phosphate, tributyl phosphate, trioctyl phosphate, triphenyl phosphate and triphenyl phosphite, and sulfonic acid and sulfonate ester. These may be used singly or in combinations of two or more kinds thereof.

The amount of the catalyst deactivator used is not particularly limited and may be an almost equimolar amount to that of the transesterification catalyst used, as described above, and specifically, the upper limit is preferably 5 mol, more preferably 2 mol, and the lower limit is preferably 0.8 mol, more preferably 1.0 mol, based on 1 mol of the transesterification catalyst used. When the catalyst deactivator is used in an amount equal to or more than the lower limit, the transesterification catalyst in the reaction product is sufficiently deactivated, and the resulting polycarbonate diol, when used as a starting material for polyurethane production, tends to be able to have a sufficiently reduced reactivity with an isocyanate group. When the catalyst deactivator is used in an amount equal to or less than the upper limit, the resulting polycarbonate diol tends to not only be able to be suppressed in coloration, but also be able to favorably promote polymerization of urethane when used as a starting material for urethane.

The deactivation of the transesterification catalyst by addition of the catalyst deactivator can be made even at room temperature, but is more efficiently made by a heating treatment. The temperature of such a heating treatment is not particularly limited, the upper limit is preferably 140°C, more preferably 130°C, further preferably 120°C, and the lower limit is preferably 80°C, more preferably 100°C, further preferably 110°C. A temperature equal to or more than the lower limit allows the time for deactivation of the transesterification catalyst to be shortened and thus is efficient, and also allows for a sufficient degree of deactivation. In this regard, when a phosphorus-based compound is used as the deactivator, a temperature of 140°C or less tends to be able to suppress decomposition of the phosphorus-based compound and allow for stable deactivation. Therefore, the resulting polycarbonate diol can be suppressed in coloration, and tends to allow for stable urethanization reaction when used as a starting material for urethane.

The time for reaction with the catalyst deactivator is not particularly limited, and is, for example, 1 to 5 hours.

<1-4. Physical properties of polycarbonate diol>

The polycarbonate diol of the present embodiment satisfies the following formula (A):

$$HO\text{-}R(OC{=}OOR)m\text{-}OH \qquad (A)$$

wherein R represents a divalent aliphatic hydrocarbon group or alicyclic hydrocarbon group having 2 to 20 carbon atoms, and m is an integer of 2 or more and 600 or less. In the formula (A), R preferably represents a divalent aliphatic hydrocarbon group or alicyclic hydrocarbon group having 2 to 20 carbon atoms. Specific examples of R include, but not particularly limited, propylene, tetramethylene, pentamethylene, hexamethylene, nonamethylene, decamethylene, 2, 2-dimethyl-1,3-propylene, 2-methyl-1,3-propylene, 3-methylpentamethylene, and 2-methyl-octamethylene, specific examples of the alicyclic hydrocarbon group include 1,4-cyclohexanedimethylene and tricyclodecanedimethylene, and in particular, propylene, tetramethylene, pentamethylene, and hexamethylene are preferred.

In the formula (A), m is preferably an integer of 2 to 600, more preferably an integer of 3 to 100, further preferably an integer of 5 to 30.

The polycarbonate diol of the present embodiment is preferably a polycondensation product by the transesterification reaction of the dihydroxy compound and the carbonate ester.

Suitable physical properties of the polycarbonate diol of the present embodiment are described below.

<1-4-1. Molecular weight-molecular weight distribution>

The lower limit of the number average molecular weight (Mn) of the polycarbonate diol of the present embodiment is 250, preferably 500, more preferably 750, further preferably 1000. On the other hand, the upper limit of the number average molecular weight (Mn) of the polycarbonate diol of the present embodiment is 100000, preferably 50000, further preferably 10000, particularly preferably 3000. When the number average molecular weight of the polycarbonate diol is equal to or more than the lower limit, a polyurethane formed tends to be improved in, for example, flexibility. On the other hand, when the number average molecular weight of the polycarbonate diol is equal to or less than the upper limit, the polycarbonate diol is reduced in viscosity and tends to be easily handled during polyurethanization.

The number average molecular weight of the polycarbonate diol is determined from the hydroxyl value (average hydroxyl valence) of the polycarbonate diol, as shown in Examples described below.

Examples of the method for controlling the number average molecular weight (Mn) of the polycarbonate diol within the above range include, but not particularly limited, a method including adjusting the polycondensation reaction time of the polycarbonate diol and adjusting the amount of the dihydroxy compound as a starting material monomer to be extracted, to control the number average molecular weight (Mn) of the polycarbonate diol within the above range.

<1-4-2.APHA value>

The color of the polycarbonate diol of the present embodiment is preferably 50 or less, more preferably 40 or less, further preferably 30 or less, particularly preferably 20 or less as the value (hereinafter, designated as "APHA value".) expressed by the Hazen color index (according to JIS K0071-1: 1998). The lower limit of the APHA value is not particularly limited, and is, for example, 0 or more. When the APHA value is 50 or less, the color tone of a polyurethane obtained with the polycarbonate diol as a starting material is improved to result in a tendency to enhance marketability and/or improve heat stability.

Examples of the method for controlling the APHA value of the polycarbonate diol within the above range include, but not particularly limited, a method including performing the transesterification reaction at a reaction temperature falling within a preferred temperature range described above and a method including performing the transesterification reaction (polymerization reaction or polycondensation reaction) for a required time for the reaction, within a preferred temperature range described above.

In the present embodiment, the APHA value of the polycarbonate diol can be measured by a method described in Examples below.

<1-4-3. Metals contained in polycarbonate diol>

The polycarbonate diol of the present embodiment preferably includes at least one metal (M1) selected from the group consisting of metals in Group 6, Group 7, Group 8, Group 9, Group 10 and Group 11 in the long-period type periodic table and at least one metal (M2) selected from the group consisting of metals in Group 1 and Group 4 in the long-period type periodic table, as metals contained.

The polycarbonate diol of the present embodiment preferably contains at least one metal (M1) selected from the group consisting of metals in Group 6, Group 7, Group 8, Group 9, Group 10 and Group 11 in the long-period type periodic table in a total amount of 1 ppm or more and 25 ppm or less, more preferably 2 ppm or more and 15 ppm or less, further preferably 5 ppm or more and 10 ppm or less.

The polycarbonate diol of the present embodiment, when contains the metal (M1) at a content of 1 ppm or more in terms of the total amount thereof, is reduced in APHA value, and tends to result in an enhancement in reaction rate of urethanization when used as a starting material for urethane. The polycarbonate diol of the present embodiment, when contains the metal (M1) at a content of 25 ppm or less in terms of the total amount thereof, can be inhibited from being colored due to heating, and tends to allow for stable urethanization reaction when used as a starting material for urethane.

The metal (M1) contained in the polycarbonate diol of the present embodiment is preferably at least one metal selected from the group consisting of molybdenum, manganese, iron, cobalt, nickel and copper. Among them, in particular, manganese is more preferred.

Such a metal contained in the polycarbonate diol may be present as a residue of the polymerization catalyst, or may be added in a predetermined amount intendedly after production.

The polycarbonate diol of the present embodiment preferably contains at least one metal (M2) selected from the group consisting of metals in Group 1 and Group 4 in the long-period type periodic table in a total amount of 0.5 ppm or more and 12.5 ppm or less, more preferably 0.7 ppm or more and 7.5 ppm or less, further preferably 1 ppm or more and 3 ppm or less.

The polycarbonate diol of the present embodiment, when contains the metal (M2) at a content of 0.5 ppm or more in terms of the total amount thereof, is reduced in APHA value, and tends to result in an enhancement in reaction rate of urethanization when used as a starting material for urethane. The polycarbonate diol of the present embodiment, when contains the metal (M2) at a content of 12.5 ppm or less in terms of the total amount thereof, is decreased in amount of ether linkage and can be inhibited from being colored due to heating, and tends to allow for stable urethanization reaction when used as a starting material for urethane.

The metal (M2) contained in the polycarbonate diol of the present embodiment is preferably at least one metal selected from the group consisting of lithium, sodium, potassium, rubidium, cesium, francium, titanium, zirconium, and hafnium. Among them, at least one metal selected from the group consisting of lithium, sodium, potassium, titanium, zirconium and hafnium is more preferred, at least one metal selected from the group consisting of lithium, sodium, potassium and titanium is further preferred, and lithium is particularly preferred.

Such a metal contained in the polycarbonate diol may be present as a residue of the polymerization catalyst, or may be added in a predetermined amount intendedly after production.

<1-4-4. Ether linkage>

The polycarbonate diol of the present embodiment has a basic structure in which a dihydroxy compound is polymerized by a carbonate group. However, ether linkage resulting from any side reaction such as partial dehydration of the dihydroxy compound and/or partial decarboxylation reaction of the carbonate ester may be incorporated depending on the production method, and the amount of presence thereof may be increased to result in deterioration in weather resistance and/or heat resistance and therefore production is preferably made so that the proportion of the ether linkage is not excessively high. In order that the ether linkage in the polycarbonate diol is reduced and properties such as weather resistance and heat resistance are ensured, the amount of the ether linkage contained in a molecular chain of the polycarbonate diol of the present embodiment is usually 5% by mol or less, preferably 3% by mol or less, more preferably 2% by mol or less in terms of percent by mol. Such a value can be determined by alkali hydrolysis and gas chromatographic measurement. Specifically, such a value can be measured by a method described in Examples below.

Examples of the method for controlling the amount of the ether linkage contained in the polycarbonate diol include, but not particularly limited, a method including production with the transesterification catalyst of the present application under milder reaction conditions within a short time.

<1-4-5. Terminal primary hydroxyl group (OH) rate>

The terminal primary hydroxyl group (OH) purity of the polycarbonate diol of the present embodiment is preferably 97% or more, more preferably 98% or more, further preferably 99% or more. When the terminal primary hydroxyl group (OH) purity is 97% or more, the reaction rate in production (synthesis) of a polyurethane (in particular, thermoplastic polyurethane) with the polycarbonate diol of the present embodiment as a starting material compound tends to be increased, and the resulting polyurethane tends to be high in strength.

In the present embodiment, the above transesterification catalysts A1 and A2 can be used to shorten the reaction time and also produce the polycarbonate diol under mild reaction conditions, and therefore a high terminal primary hydroxyl group (OH) purity can be achieved.

In the present embodiment, the terminal primary hydroxyl group (OH) purity of the polycarbonate diol can be measured by a method described in Examples below.

<1-5. Application of polycarbonate diol>

The polycarbonate diol of the present embodiment is excellent in mechanical properties and durability, and therefore can be used in various applications. For example, the polycarbonate diol can be widely used for foam, elastomers, coating materials, fibers, adhesives, floor materials, sealants, medical materials, artificial leather, coating agents, aqueous polyurethane coating materials, and the like. The polycarbonate diol of the present embodiment, when used as a starting material particularly in applications of artificial leather, synthetic leather, aqueous polyurethane, adhesives, medical materials, floor materials, coating agents, and the like, can impart good surface properties where excellent weather resistance, heat resistance, moisture and heat resistance, and friction resistance are excellent to cause less coloration, hardly cause scratches due to scratching or the like, and cause less degradation due to friction, and therefore can be suitably used as a starting material for various coatings.

A polyurethane of the present embodiment includes the above polycarbonate diol. The polyurethane of the present embodiment includes the above polycarbonate diol and therefore is excellent in chemical resistance, heat resistance, and hydrolysis resistance.

Examples

Hereinafter, the present embodiment is described in further detail with reference to Examples and the like, but the present embodiment is not limited to these Examples at all. Here, "part(s)" in Examples means "part(s) by mass", unless particularly noted.

In the following Examples and Comparative Examples, various physical properties of each polycarbonate diol and each polyurethane film were examined according to the following test methods.

<Test methods>

[Evaluation of transesterification catalyst performance]

In production of a polycarbonate diol (PCD) from a dihydroxy compound and a carbonate ester, a carbonate ester (for example, ethylene carbonate (EC)) and a dihydroxy compound (starting material diol) as monomer starting materials

are decreased to produce a polycarbonate diol (PCD) and produce a carbonate ester-derived hydroxy compound (a monohydroxy compound in the case of dialkyl carbonate as a starting material carbonate ester, or a dihydroxy compound in the case of alkylene carbonate as a starting material carbonate ester, for example, ethylene glycol (EG)) as a by-product in an esterification step, for example, as represented in the following formula (14):

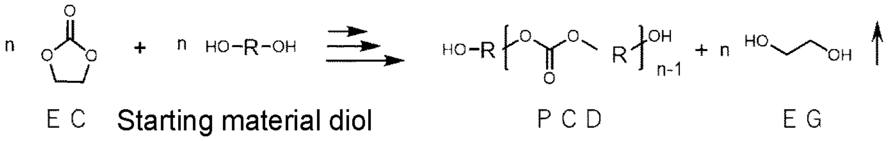


(14)

wherein an example of use of ethylene carbonate (EC) as the carbonate ester is shown, and in this case, ethylene glycol (EG) is produced as a by-product by the reaction.

A method for evaluating catalyst performance involved determining the amount of a hydroxy compound (a monohydroxy compound in the case of dialkyl carbonate as a starting material carbonate ester, or a dihydroxy compound in the case of alkylene carbonate as a starting material carbonate ester, for example, ethylene glycol (EG)) distilled out each after 1 hour and 2 hours from reaction initiation in generation reaction of a polycarbonate diol (PCD) from a dihydroxy compound and a carbonate ester, according to gas chromatography, and determining the carbonate conversion according to the following expression (15), (16) or (17).

(Method for calculating carbonate conversion in use of alkylene carbonate)

Carbonate conversion (%) = (Number of moles of dihydroxy compound distilled out)/(Number of moles of carbonate ester loaded) × 100 (15)

(Method for calculating carbonate conversion in use of dialkyl carbonate)

Carbonate conversion (%) = (Number of moles of hydroxy compound distilled out/2)/(Number of moles of carbonate ester loaded) × 100 (16)

(Method for calculating carbonate conversion in use of diphenyl carbonate)

Carbonate conversion (%) = (Number of moles of phenol distilled out/2)/(Number of moles of carbonate ester loaded) × 100 (17)

Conditions of gas chromatographic analysis were as follows.

Gas chromatography GC-14B (manufactured by Shimadzu Corporation) equipped with DB-WAX (manufactured by Agilent J&W) as a column was used, 1,3-propanediol was used as an internal standard, and the detector was FID. The temperature rise profile of the column was a profile including retention at 100°C for 5 minutes and then temperature rise to 200°C at 5°C/min.

The reaction rate in polyester diol synthesis was determined from the amount of an alcohol (for example, methanol in the case of dibasic acid dimethyl ester as a starting material) distilled off by the reaction, according to the following expression (17)'.

(Reaction rate) = (Number of moles of alcohol distilled out/2)/(Number of moles of dibasic acid ester loaded) × 100 (17)'

[Measurement of hydroxyl (OH) value]

An acetylation reagent was prepared by diluting 12.5 g of acetic anhydride with 50 mL of pyridine in a measuring flask. In a 100-mL round-bottom flask was precisely weighed 2.5 to 5.0 g of a sample. After 5 mL of an acetylation reagent and 10 mL of toluene were added through a whole pipette to the round-bottom flask, a cooling tube was mounted and the

solution in the round-bottom flask was stirred and heated at 100°C for 1 hour. To the round-bottom flask was added 2.5 mL of distilled water through a whole pipette, and the solution in the round-bottom flask was further heated and stirred for 10 minutes. After the solution in the round-bottom flask was cooled for 2 to 3 minutes, 12.5 mL of ethanol was added. After 2 to 3 droplets of phenolphthalein as an indicator were placed in the round-bottom flask, the solution in the round-bottom flask was titrated with 0.5 mol/L ethanolic potassium hydroxide.

A blank test was made by placing 5 mL of an acetylation reagent, 10 mL of toluene, and 2.5 mL of distilled water in a 100-mL round-bottom flask, heating and stirring them for 10 minutes, and then performing titration in the same manner as described above. The results were used to calculate the OH value according to the following expression (18).

$$\text{OH value (mg-KOH/g)} = \{(b - a) \times 28.05 \times f\}/e \quad (18)$$

a: amount (mL) of titration of sample
b: amount (mL) of titration in blank test
e: mass (g) of sample
f: factor of titration liquid

[Number average molecular weight (Mn)]

The number average molecular weight was determined by the following expression (19).

$$\text{Number average molecular weight} = 2/(\text{OH value} \times 10^{-3}/56.11) \quad (19)$$

[Measurement of APHA value]

The Hazen color index (APHA value) was measured by comparison with a standard liquid placed in a colorimetric tube, according to JIS K0071-1. The polycarbonate diol which was a solid at normal temperature was warmed to 70°C and molten, and then subjected to measurement of the Hazen color index (APHA value).

[Method for analyzing amount of ether linkage in polycarbonate diol]

In a 100-mL round-bottom flask was taken 1 g of the polycarbonate diol, and 30 g of methanol and 8 g of a 28% sodium methoxide solution in methanol were placed to perform reaction at 100°C for 1 hour. After a reaction liquid was cooled to room temperature, 2 to 3 droplets of phenolphthalein as an indicator were added, and the reaction liquid was neutralized with hydrochloric acid. The reaction liquid neutralized was cooled in a refrigerator for 1 hour, and then filtrated. Thereafter, the resulting filtrate was analyzed with gas chromatography (GC). GC analysis was performed with gas chromatography GC-14B (manufactured by Shimadzu Corporation, Japan) equipped with DB-WAX (manufactured by Agilent J&W, USA) as a column, 1,3-propanediol as an internal standard, and a hydrogen flame ionization detector (FID) as a detector, and each component was quantitatively analyzed. The temperature rise profile of the column was a profile including retention at 100°C for 5 minutes and then temperature rise to 200°C at 5°C/min.

The ether linkage is considered to be generated by dehydration reaction of a hydroxyl group or decomposition (decarboxylation) of a carbonate ester, and, for example, in a case where a polycarbonate diol is produced with ethylene carbonate and hexanediol as starting materials, diethylene glycol and 6-(2-hydroxyethoxy)hexane-1-ol are detected as compounds with ether linkage.

[Method for analyzing terminal primary hydroxyl group (OH) ratio of polycarbonate diol]

Seventy g to 100 g of the polycarbonate diol was weighed in a 300-ml round-bottom flask, and heated and stirred at a pressure of 0.1 kPa or less in a heating bath at about 180°C by use of a rotary evaporator to which a trap ball for fraction recovery was connected, to obtain a fraction corresponding to about 1 to 2% by mass of the polycarbonate diol, namely, about 1 g (0.7 to 2 g) of the fraction, in the trap ball. The fraction was recovered with about 100 g (95 to 105 g) of ethanol as a solvent. The solution recovered was subjected to gas chromatographic analysis (hereinafter, referred to as "GC analysis".), and the terminal primary hydroxyl group (OH) ratio (%) of the polycarbonate diol was calculated from the value of the peak area in the resulting chromatograph, according to the following expression (20). Here, GC analysis was performed with gas chromatography 6890 (manufactured by Hewlett-Packard Company, USA) equipped with 30-m DB-WAX (manufactured by Agilent J&W, USA) having a membrane thickness of 0.25 μm, as a column, and a hydrogen flame

ionization detector (FID) as a detector. The temperature rise profile of the column was a profile of temperature rise from 60°C to 250°C at 10°C/min and then retention at that temperature for 15 minutes.

Each peak in GC analysis was identified with the following GC-MS apparatus. The GC apparatus used was 6890 (manufactured by Hewlett-Packard Company, USA) equipped with DB-WAX (manufactured by Agilent J&W, USA) as a column. The temperature was raised from an initial temperature of 40°C to 220°C at a rate of temperature rise of 10°C/min in the GC apparatus. The MS apparatus used was Auto-mass SUN (manufactured by JEOL Ltd.). In the MS apparatus, the ionization voltage was 70 eV, the scanning range m/z was 10 to 500, and the photomultiplier gain was 450 V.

$$\text{Terminal primary OH ratio (\%)} = B/A \times 100 \quad (20)$$

A: sum of areas of peaks assigned to alcohols including diol (except for ethanol)
B: sum of areas of peaks assigned to diol having primary OH at each of both terminals

[Amount of catalyst remaining in polycarbonate diol]

About 0.1 g of the polycarbonate diol was weighed, and dissolved in 4 mL of acetonitrile to obtain a solution. Thereafter, 20 mL of pure water was added to the solution obtained, to precipitate the polycarbonate diol, and the polycarbonate diol precipitated was removed by filtration. The solution after filtration was diluted with pure water to a predetermined concentration. The metal ion concentration in the solution diluted was analyzed with ion chromatography. Here, the metal ion concentration in acetonitrile used as a solvent was measured as a blank value, and the value obtained by subtracting the metal ion concentration in this solvent content from the metal ion concentration in the above solution diluted was defined as the metal ion concentration in the polycarbonate diol product. Measurement conditions were as shown below. The calibration curves of various metals, created in advance, were used to determine the concentrations of such various metals remaining in the polycarbonate diol. High-performance liquid chromatograph (HPCL) measurement conditions

Apparatus: Waters 2690
Column: IonPac CS12A
Flow rate: 1.0 ml/min
Amount of injection: 1.5 ml
Pressure: 950 to 980 psi
Column temperature: 35°C
Sensitivity of detector: RANGE 200 μS
Suppressor: CSRS 60 mA
Eluent: aqueous 20 mmol/l methanesulfonic acid solution

[Measurement of molecular weight of polyurethane]

One portion of a polyurethane film was cut out, and an N,N-dimethylacetamide (DMF) solution was prepared so that the polyurethane concentration was 0.1% by mass. The DMF solution prepared was used to measure each molecular weight of polyurethane, as follows. A GPC apparatus [product name "HLC-8320" (column: Tskgel Super HM-H × 4) manufactured by Tosoh Corporation] was used in the measurement. The eluent used was a solution in which 2.6 g of lithium bromide was dissolved in 1 L of dimethylacetamide. The number average molecular weight (Mn) of polyurethane in terms of standard polystyrene was calculated from the measurement results obtained.

[Tensile test at room temperature of polyurethane film]

A strip-shaped test piece having a width of 10 mm, a length of 100 mm, and a thickness of about 0.5 mm was produced from a polyurethane film, according to JIS K6301

(2010). A tensile test of the test piece produced was carried out with a tensile tester (product name "Tensilon, Model RTE-1210" manufactured by Orientec Corporation) at a distance between chucks of 20 mm and a tensile speed of 100 mm/min and at a temperature of 23°C (relative humidity 55%). In the tensile test, the test piece was measured with respect to the stress at the time of 100% elongation (100% modulus), the strength at breaking, and the elongation at breaking.

[Evaluation of oleic acid resistance of polyurethane]

A test piece of 3 cm × 3 cm was cut out from a polyurethane film. The mass of the test piece was measured with a precision balance. Thereafter, the test piece was charged in a glass bottle having a volume of 250 mL, in which 50 mL of oleic acid was placed as a test solvent, and left to still stand in a constant-temperature bath at 80°C under a nitrogen atmosphere for 16 hours and then subjected to a chemical resistance test. After the test, the test piece was taken out and the front and rear surface thereof were lightly wiped with a paper wiper. Thereafter, the mass of the test piece was measured with a precision balance. The mass change rate (rate of increase) from that before the test was calculated by the following expression. It is indicated that, as the mass change rate is closer to 0%, oleic acid resistance (chemical resistance) is better.

Mass change rate (%) = (Mass of test piece after test - Mass of test piece before test)/Mass of test piece before test × 100

[Evaluation of heat resistance of polyurethane]

A strip-shaped test piece having a width of 10 mm, a length of 100 mm, and a thickness of about 50 μm was produced from a polyurethane film. The test piece was heated in a gear oven at a temperature of 120°C for 1000 hours. The breaking strength of the test piece after heating was measured in the same manner as in the above [Tensile test at room temperature]. The breaking strength retention rate (%) was determined by the following expression.

Breaking strength retention rate (%) = Breaking strength of test piece after heating/Breaking strength of test piece before test × 100

[Evaluation of hydrolysis resistance of polyurethane]

A strip-shaped test piece having a width of 10 mm, a length of 100 mm, and a thickness of about 50 μm was produced from a polyurethane film. The test piece was heated in a constant temperature and humidity bath at a temperature of 85°C and a relative humidity of 85% for 200 hours. The breaking strength of the test piece after heating was measured in the same manner as in the above [Tensile test at room temperature]. The breaking strength retention rate (%) was determined by the following expression.

Breaking strength retention rate (%) = Breaking strength of test piece after heating/Breaking strength of test piece before test × 100

[Abbreviations of compounds]

Abbreviations of compounds in the following Examples and Comparative Examples are as follows.

$Mn(acac)_2 \cdot 2H_2O$: manganese (II) acetylacetonate dihydrate
$Mn(acac)_3$: manganese(III) acetylacetonate
$Mn(OAc)_2 \cdot 4H_2O$: manganese (II) acetate tetrahydrate
$Mn(tBuCOCH_2COtBu)_2 \cdot 2H_2O$: 2,2,6,6-tetramethyl-3,5-heptanedionatomanganese(II) dihydrate
$Mn(CF_3COCH_2COCF_3)_2 \cdot 2H_2O$: hexafluoroacetylacetonatomanganese dihydrate
$[Mo(acac)]_2$: molybdenum(II) acetylacetonate dimer
$Mg(acac)_2 \cdot 2H_2O$: magnesium(II) acetylacetonate dihydrate
$Fe(acac)_3$: iron(III) acetylacetonate
$Co(acac)_2 \cdot 2H_2O$: cobalt(II) acetylacetonate dihydrate
$Ni(acac)_2 \cdot 2H_2O$: nickel(II) acetylacetonate dihydrate
$Cu(acac)_2$: copper(II) acetylacetonate
$Ti(OBu)_4$: tetra-n-butyl titanate
$Ti(acac)_2(OiPr)_2$: titanium(IV) bis(acetylacetonate)diisopropoxide
$Mg(acac)_2$: magnesium(II) acetylacetonate
Li-OMe: lithium methoxide
Na-OMe: sodium methoxide
K-OMe: potassium methoxide
Li-t-OBu: lithium-t-butoxide

EC: ethylene carbonate
EG: ethylene glycol
DMC: dimethyl carbonate
DEC: diethyl carbonate
DPC: diphenyl carbonate
13PDO: 1,3-propanediol
14BDO: 1,4-butanediol
15PDO: 1,5-pentanediol
16HDO: 1,6-hexanediol
110DDO: 1,10-decanediol
3M15PDO: 3-methyl-1,5-pentanediol

[Example 1]

A 1-L separable flask equipped with a stirring machine, a thermometer and an Oldershaw (number of theoretical stages of 15) with a vacuum jacket having a reflux head at the top of head were loaded with 355 g (3.00 mol) of 1,6-hexanediol and 264 g (3.00 mol) of ethylene carbonate as starting material monomers, and 16.3 mg of $Mn(acac)_2 \cdot 2H_2O$ and 6.7 mg of Li-OMe were added as catalysts. The starting materials in the flask were heated in an oil bath set to 170°C, and such starting material monomers were polycondensed by transesterification reaction for 2 hours with one portion of a fraction being extracted through the reflux head at an inner temperature of the flask of 150°C and a degree of vacuum of 4 kPa, thereby obtaining a polycarbonate diol. The carbonate conversion was analyzed by gas chromatography after 1 hour and 2 hours from reaction initiation. The amount of ether linkage after 2 hours from reaction initiation was also measured. The results were shown in Table 1.

[Examples 2 to 14 and Comparative Examples 1 to 5]

Each polycarbonate diol was obtained by polycondensation of starting material monomers by transesterification reaction in the same manner as in Example 1 except that the types and amounts of the catalysts added were those described in Table 1. The carbonate conversion was analyzed by gas chromatography after 1 hour and 2 hours from reaction initiation in the same manner as in Example 1. The amount of ether linkage after 2 hours from reaction initiation was also measured. The results were shown in Table 1.

[Example 1A]

A 1-L separable flask equipped with a stirring machine, a thermometer and an Oldershaw (number of theoretical stages of 15) with a vacuum jacket having a reflux head at the top of head were loaded with 523 g (3.00 mol) of dimethyl adipate and 1,4-butanediol270 g of (3.00 mol) as starting material monomers, and 17.7 mg of $Mn(OAc)_2 \cdot 4H_2O$ and 8.6 mg of Li-OMe were added as catalysts. The starting materials in the flask were heated in an oil bath set to 170°C, and such starting material monomers were polycondensed by transesterification reaction for 2 hours with one portion of a fraction being extracted through the reflux head at an inner temperature of the flask of 150°C and normal pressure, thereby obtaining a polyester diol. The carbonate conversion was analyzed by gas chromatography after 1 hour and 2 hours from reaction initiation. The results were shown in Table 1-1.

[Comparative Examples 1B and 2B]

Each polycarbonate diol was obtained by polycondensation of starting material monomers by transesterification reaction in the same manner as in Example 1A except that the types and amounts of the catalysts added were those described in Table 1-1. The carbonate conversion was analyzed by gas chromatography after 1 hour and 2 hours from reaction initiation in the same manner as in Example 1A. The results were shown in Table 1-1.

[Table 1]

| | Catalyst A1 | Amount (mg) of catalyst A1 | Concentration (ppm) of catalyst metal M1 | Catalyst A2 | Amount (mg) of catalyst A2 | Concentration (ppm) of catalyst metal M2 | Reaction temperature (°C) | Carbonate conversion (%) after 1 hour from reaction initiation | Carbonate conversion (%) after 2 hours from reaction initiation | Amount (%) of ether linkage |
|---|---|---|---|---|---|---|---|---|---|---|
| Example 1 | $Mn(acac)_2 \cdot 2H_2O$ | 16.3 | 5 | Li-OMe | 6.7 | 2 | 150 | 43 | 68 | 1.4 |
| Example 2 | $Mn(acac)_3$ | 19.8 | 5 | Li-OMe | 6.7 | 2 | 150 | 45 | 70 | 1.5 |
| Example 3 | $Mn(OAc)_2 \cdot 4H_2O$ | 13.8 | 5 | Li-OMe | 6.7 | 2 | 150 | 52 | 75 | 1.3 |
| Example 4 | $Mn(tBuCOCH_2COtBu)_2 \cdot 2H_2O$ | 25.9 | 5 | Li-OMe | 6.7 | 2 | 150 | 47 | 71 | 1.5 |
| Example 5 | $Mn(CF_3COCH_2COCF_3)_2 \cdot 2H_2O$ | 28.6 | 5 | Li-OMe | 6.7 | 2 | 150 | 49 | 72 | 1.1 |
| Example 6 | $[Mo(acac)]_2$ | 13.8 | 5 | Li-OMe | 6.7 | 2 | 150 | 25 | 43 | 2.5 |
| Example 7 | $Fe(acac)_3$ | 19.6 | 5 | Li-OMe | 6.7 | 2 | 150 | 26 | 45 | 2.2 |
| Example 8 | $Co(acac)_2 \cdot 2H_2O$ | 15.4 | 5 | Li-OMe | 6.7 | 2 | 150 | 18 | 42 | 2.6 |
| Example 9 | $Ni(acac)_2 \cdot 2H_2O$ | 15.4 | 5 | Li-OMe | 6.7 | 2 | 150 | 26 | 45 | 2.8 |
| Example 10 | $Cu(acac)_2$ | 12.7 | 5 | Li-OMe | 6.7 | 2 | 150 | 29 | 47 | 2.4 |
| Example 11 | $Mn(OAc)_2 \cdot 4H_2O$ | 13.8 | 5 | Na-OMe | 2.9 | 2 | 150 | 36 | 61 | 1.5 |
| Example 12 | $Mn(OAc)_2 \cdot 4H_2O$ | 13.8 | 5 | K-OMe | 2.2 | 2 | 150 | 31 | 58 | 1.6 |
| Example 13 | $Mn(OAc)_2 \cdot 4H_2O$ | 13.8 | 5 | $Ti(OBu)_4$ | 8.8 | 2 | 150 | 25 | 36 | 2.8 |
| Example 14 | $Mn(OAc)_2 \cdot 4H_2O$ | 13.8 | 5 | Li-t-OBu | 14.2 | 2 | 150 | 50 | 71 | 1.6 |

(continued)

| | Catalyst A1 | Amount (mg) of catalyst A1 | Concentration (ppm) of catalyst metal M1 | Catalyst A2 | Amount (mg) of catalyst A2 | Concentration (ppm) of catalyst metal M2 | Reaction temperature (°C) | Carbonate conversion (%) after 1 hour from reaction initiation | Carbonate conversion (%) after 2 hours from reaction initiation | Amount (%) of ether linkage |
|---|---|---|---|---|---|---|---|---|---|---|
| Comparative Example 1 | $Ti(OBu)_4$ | 22.0 | 5 | Li-OMe | 6.7 | 2 | 150 | 5 | 11 | 3.5 |
| Comparative Example 2 | $Ti(acac)_2(OiPr)_2$ | 23.6 | 5 | Li-OMe | 6.7 | 2 | 150 | 4 | 10 | 3.9 |
| Comparative Example 3 | $Mg(acac)_2\cdot 2H_2O$ | 32.9 | 5 | Li-OMe | 6.7 | 2 | 150 | 8 | 14 | 3.3 |
| Comparative Example 4 | $Mn(OAc)_2\cdot 4H_2O$ | 13.8 | 5 | Li-OMe | 0.0 | 0 | 150 | 13 | 25 | 0.4 |
| Comparative Example 5 | $Mn(OAc)_2\cdot 4H_2O$ | 0.0 | 0 | Li-OMe | 6.7 | 2 | 150 | 18 | 29 | 1.6 |

[Table 1-1]

| | Catalyst A1 | Amount (mg) of catalyst A1 | Concentration (ppm) of catalyst metal M1 | Catalyst A2 | Amount (mg) of catalyst A2 | Concentration (ppm) of catalyst metal M2 | Reaction temperature (°C) | Reaction rate (%) after 1 hour from reaction initiation | Reaction rate (%) after 2 hours from reaction initiation |
|---|---|---|---|---|---|---|---|---|---|
| Example 1A | Mn(OA-c)$_2$·4$H_2O$ | 17.7 | 5 | Li-OMe | 8.6 | 2 | 150 | 63 | 80 |
| Comparative Example 1B | Mn(OA-c)$_2$·4$H_2O$ | 17.7 | 5 | Li-OMe | 0.0 | 0 | 150 | 20 | 31 |
| Comparative Example 2B | Mn(OA-c)$_2$·4$H_2O$ | 0.0 | 0 | Li-OMe | 8.6 | 2 | 150 | 22 | 33 |

[Examples 15 to 25]

Each polycarbonate diol was obtained by polycondensation of starting material monomers by transesterification reaction in the same manner as in Example 1 except that the types and amounts of catalysts added were those described in Table 2 and the reaction temperature was each temperature described in Table 2. The carbonate conversion was analyzed by gas chromatography after 1 hour and 2 hours from reaction initiation in the same manner as in Example 1. The amount of ether linkage after 2 hours from reaction initiation and the APHA were also measured. The results were shown in Table 2.

[Table 2]

| | Catalyst A1 | Amount (mg) of catalyst A1 | Concentration (ppm) of catalyst metal M1 | Catalyst A2 | Amount (mg) of catalyst A2 | Concentration (ppm) of catalyst metal M2 | Reaction temperature (°C) | Carbonate conversion (%) after 1 hour from reaction initiation | Carbonate conversion (%) after 2 hours from reaction initiation | APHA | Amount (%) of ether linkage |
|---|---|---|---|---|---|---|---|---|---|---|---|
| Example 15 | $Mn(OAc)_2 \cdot 4H_2O$ | 13.8 | 5 | Li-OMe | 6.7 | 2 | 130 | 30 | 45 | 10 | 1.1 |
| Example 16 | $Mn(OAc)_2 \cdot 4H_2O$ | 13.8 | 5 | Li-OMe | 6.7 | 2 | 160 | 65 | 86 | 20 | 1.9 |
| Example 17 | $Mn(OAc)_2 \cdot 4H_2O$ | 13.8 | 5 | Li-OMe | 3.3 | 1 | 150 | 38 | 58 | 10 | 1.2 |
| Example 18 | $Mn(OAc)_2 \cdot 4H_2O$ | 13.8 | 5 | Li-OMe | 1.7 | 0.5 | 150 | 25 | 40 | 10 | 0.6 |
| Example 19 | $Mn(OAc)_2 \cdot 4H_2O$ | 13.8 | 5 | Li-OMe | 0.8 | 0.25 | 150 | 20 | 35 | 10 | 0.5 |
| Example 20 | $Mn(OAc)_2 \cdot 4H_2O$ | 13.8 | 5 | Li-OMe | 16.7 | 5 | 150 | 59 | 85 | 20 | 1.6 |
| Example 21 | $Mn(OAc)_2 \cdot 4H_2O$ | 13.8 | 5 | Li-OMe | 33.5 | 10 | 150 | 20 | 35 | 50 | 1.9 |
| Example 22 | $Mn(OAc)_2 \cdot 4H_2O$ | 8.3 | 3 | Li-OMe | 6.7 | 2 | 150 | 42 | 65 | 10 | 1.3 |
| Example 23 | $Mn(OAc)_2 \cdot 4H_2O$ | 2.8 | 1 | Li-OMe | 6.7 | 2 | 150 | 26 | 33 | 10 | 1.2 |
| Example 24 | $Mn(OAc)_2 \cdot 4H_2O$ | 27.6 | 10 | Li-OMe | 6.7 | 2 | 150 | 58 | 81 | 20 | 1.8 |
| Example 25 | $Mn(OAc)_2 \cdot 4H_2O$ | 55.2 | 20 | Li-OMe | 6.7 | 2 | 150 | 58 | 81 | 50 | 2.0 |

[Examples 26 to 29, and Comparative Examples 6 and 7]

Each polycarbonate diol was obtained by polycondensation of starting material monomers by transesterification reaction in the same manner as in Example 1 except that the types and amounts of the catalysts added and the type of the carbonate ester used was as described in Table 3. The carbonate conversion was analyzed by gas chromatography after 1 hour and 2 hours from reaction initiation in the same manner as in Example 1. The results were shown in Table 3.

[Table 3]

| | Catalyst A1 | Amount (mg) of catalyst A1 | Concentration (ppm) of catalyst metal M1 | Catalyst A2 | Amount (mg) of catalyst A2 | Concentration (ppm) of catalyst metal M2 | Carbonate ester | Reaction temperature (°C) | Carbonate conversion (%) after 1 hour from reaction initiation | Carbonate conversion (%) after 2 hours from reaction initiation |
|---|---|---|---|---|---|---|---|---|---|---|
| Example 26 | $Mn(OAc)_2 \cdot 4H_2O$ | 13.8 | 5 | Li-OMe | 6.7 | 2 | DMC | 150 | 47 | 73 |
| Example 27 | $Mn(OAc)_2 \cdot 4H_2O$ | 13.8 | 5 | Li-OMe | 6.7 | 2 | DEC | 150 | 50 | 73 |
| Example 28 | $Mn(OAc)_2 \cdot 4H_2O$ | 13.8 | 5 | Li-OMe | 6.7 | 2 | DPC | 150 | 55 | 75 |
| Example 29 | $Mn(acac)_2 \cdot 2H_2O$ | 16.3 | 5 | Li-OMe | 6.7 | 2 | DEC | 150 | 45 | 67 |
| Comparative Example 6 | $Mn(OAc)_2 \cdot 4H_2O$ | 13.8 | 5 | Li-OMe | 0.0 | 0 | DEC | 150 | 12 | 22 |
| Comparative Example 7 | $Mn(OAc)_2 \cdot 4H_2O$ | 0.0 | 0 | Li-OMe | 6.7 | 2 | DEC | 150 | 16 | 27 |

[Examples 30 to 37]

Each polycarbonate diol was obtained by polycondensation of starting material monomers by transesterification reaction in the same manner as in Example 1 except that the types and amounts of catalysts added and the type and amount of the dihydroxy compound used were those described in Table 4. The carbonate conversion was analyzed by gas chromatography after 1 hour and 2 hours from reaction initiation in the same manner as in Example 1. The results were shown in Table 4.

[Table 4]

| | Amount (g) of starting material dihydroxy compound loaded | | | | | | Catalyst A1 | Amount (mg) of catalyst A1 | Concentration (ppm) of catalyst metal M1 | Catalyst A2 | Amount (mg) of catalyst A2 | Concentration (ppm) of catalyst metal M2 | Reaction temperature (°C) | Carbonate conversion (%) after 1 hour from reaction initiation | Carbonate conversion (%) after 2 hours from reaction initiation |
|---|---|---|---|---|---|---|---|---|---|---|---|---|---|---|---|
| | 13PD-O | 14BD-O | 15PD-O | 16HD-O | 110DD-O | 3M15PD-O | | | | | | | | | |
| Example 30 | 228 | | | | | | $Mn(OAc)_2 \cdot 4H_2O$ | 13.8 | 5 | Li-OMe | 6.7 | 2 | 150 | 58 | 80 |
| Example 31 | | 270 | | | | | $Mn(OAc)_2 \cdot 4H_2O$ | 13.8 | 5 | Li-OMe | 6.7 | 2 | 150 | 55 | 77 |
| Example 32 | | | | | 523 | | $Mn(OAc)_2 \cdot 4H_2O$ | 13.8 | 5 | Li-OMe | 6.7 | 2 | 150 | 45 | 65 |
| Example 33 | 114 | 135 | | | | | $Mn(OAc)_2 \cdot 4H_2O$ | 13.8 | 5 | Li-OMe | 6.7 | 2 | 150 | 57 | 77 |
| Example 34 | | 135 | 156 | | | | $Mn(OAc)_2 \cdot 4H_2O$ | 13.8 | 5 | Li-OMe | 6.7 | 2 | 150 | 55 | 76 |
| Example 35 | | | 156 | 177 | | | $Mn(OAc)_2 \cdot 4H_2O$ | 13.8 | 5 | Li-OMe | 6.7 | 2 | 150 | 53 | 75 |
| Example 36 | | | | 177 | 261 | | $Mn(OAc)_2 \cdot 4H_2O$ | 13.8 | 5 | Li-OMe | 6.7 | 2 | 150 | 48 | 68 |
| Example 37 | | | | 177 | | 177 | $Mn(OAc)_2 \cdot 4H_2O$ | 13.8 | 5 | Li-OMe | 6.7 | 2 | 150 | 51 | 74 |

[Example 38]

A 1-L separable flask equipped with a stirring machine, a thermometer and an Oldershaw (number of theoretical stages of 15) with a vacuum jacket having a reflux head at the top of head were loaded with 355 g (3.00 mol) of 1,6-hexanediol and 264 g (3.00 mol) of ethylene carbonate, and 13.8 mg of $Mn(OAc)_2 \cdot 4H_2O$ and 6.7 mg of Li-OMe were added as catalysts. The starting materials in the flask were heated in an oil bath set to 170°C, and such starting material monomers were polycondensed by transesterification reaction for 2 hours with one portion of a fraction being extracted through the reflux head at an inner temperature of the flask of 150°C and a degree of vacuum of 4 kPa, thereby obtaining a polycarbonate diol. The carbonate conversion here (after 2 hours from reaction initiation) was measured. The measurement results are shown in Table 5.

Thereafter, switching to simple distillation was made, and the monomers were distilled out by reaction at an inner temperature of the flask of 160°C in an oil bath set to a temperature of 175°C for 1 hour with the pressure being gradually reduced to 0.5 kPa, thereby obtaining a polycarbonate diol. After a nitrogen gas was introduced to provide normal pressure, the temperature of the oil bath was set to 125°C and the inner temperature of the flask was set to 110 to 120°C. Monobutyl phosphate as a catalyst deactivator was loaded in an equimolar amount to the amount of the catalysts loaded, and stirred at a temperature of 110 to 120°C for 3 hours. The results of analysis of the resulting polycarbonate diol are shown in Table 5. The polycarbonate diol is referred to as PC1.

[Examples 39 to 41]

Each polycarbonate diol was obtained by polycondensation of starting material monomers by transesterification reaction in the same manner as in Example 38 except that the type and amount of the dihydroxy compound used were those described in Table 5. The carbonate conversion after 2 hours from reaction initiation and properties of the polycarbonate diol obtained were shown in Table 5. The resulting polycarbonate diols are respectively referred to as PC2, PC3, and PC4.

[Example 42]

A polycarbonate diol was obtained by polycondensation of starting material monomers by transesterification reaction in the same manner as in Example 41 except that the type and amount of the dihydroxy compound used were those described in Table 5 and the reaction time after switching to simple distillation was 0.5 hours. The carbonate conversion after 2 hours from reaction initiation and properties of the polycarbonate diol obtained were shown in Table 5. The resulting polycarbonate diol is referred to as PC5.

[Example 43]

A polycarbonate diol was obtained by polycondensation of starting material monomers by transesterification reaction in the same manner as in Example 41 except that the type and amount of the dihydroxy compound used were those described in Table 5 and the reaction time after switching to simple distillation was 2 hours. The carbonate conversion after 2 hours from reaction initiation and properties of the polycarbonate diol obtained were shown in Table 5. The resulting polycarbonate diol is referred to as PC6.

[Comparative Example 8]

A 1-L separable flask equipped with a stirring machine, a thermometer and an Oldershaw (number of theoretical stages of 15) with a vacuum jacket having a reflux head at the top of head were loaded with 156 g of 1,5-pentanediol, 177 g of 1,6-hexanediol, and 264 g (3.00 mol) of ethylene carbonate as starting material monomers, and 13.8 mg of $Mn(OAc)_2 \cdot 4H_2O$ was added as a catalyst. The starting materials in the flask were heated in an oil bath set to 170°C, and reacted for 7 hours with one portion of a fraction being extracted through the reflux head at an inner temperature of the flask of 150°C and a degree of vacuum of 4 kPa. (One portion of a reaction liquid was extracted after 2 hours from reaction initiation, and the carbonate conversion after 2 hours was determined.) Thereafter, switching to simple distillation was made, and the monomers were distilled out by reaction at an inner temperature of the flask of 160 to 170°C in an oil bath set to a temperature of 180°C for 4 hours with the pressure being gradually reduced to 0.5 kPa, thereby obtaining a polycarbonate diol. After a nitrogen gas was introduced to provide normal pressure, the temperature of the oil bath was set to 125°C and the inner temperature of the flask was set to 110 to 120°C. Monobutyl phosphate as a catalyst deactivator was loaded in an equimolar amount to the amount of the catalysts loaded, and stirred at a temperature of 110 to 120°C for 3 hours. The results of analysis of the resulting polycarbonate diol are shown in Table 5. The polycarbonate diol is referred to as PC7.

[Comparative Example 9]

A 1-L separable flask equipped with a stirring machine, a thermometer and an Oldershaw (number of theoretical stages of 15) with a vacuum jacket having a reflux head at the top of head were loaded with 156 g of 1,5-pentanediol, 177 g of 1,6-hexanediol, and 264 g (3.00 mol) of ethylene carbonate as starting material monomers, and 6.7 mg of Li-OMe was added as a catalyst. The starting materials in the flask were heated in an oil bath set to 170°C, and reacted for 7 hours with one portion of a fraction being extracted through the reflux head at an inner temperature of the flask of 150°C and a degree of vacuum of 4 kPa. (One portion of a reaction liquid was extracted after 2 hours from reaction initiation, and the carbonate conversion after 2 hours was determined.) Thereafter, switching to simple distillation was made, and the monomers were distilled out by reaction at an inner temperature of the flask of 160 to 170°C in an oil bath set to a temperature of 180°C for 4 hours with the pressure being gradually reduced to 0.5 kPa, thereby obtaining a polycarbonate diol. After a nitrogen gas was introduced to provide normal pressure, the temperature of the oil bath was set to 125°C and the inner temperature of the flask was set to 110 to 120°C. Monobutyl phosphate as a catalyst deactivator was loaded in an equimolar amount to the amount of the catalysts loaded, and stirred at a temperature of 110 to 120°C for 3 hours. The results of analysis of the resulting polycarbonate diol are shown in Table 5. The polycarbonate diol is referred to as PC8.

[Comparative Example 10]

A polycarbonate diol was obtained by polycondensation of starting material monomers by transesterification reaction in the same manner as in Comparative Example 9 except that the amount of Li-OMe was 33.5 mg. The carbonate conversion after 2 hours from reaction initiation and properties of the polycarbonate diol obtained were shown in Table 5. The resulting polycarbonate diol is referred to as PC9.

[Table 5]

| | Type of catalyst | Mass (g) of dihydroxy compound | | | Carbonate conversion (%) after 2 hours from reaction initiation | Properties of polycarbonate diol | | | | | | | Polycarbonate diol obtained |
|---|---|---|---|---|---|---|---|---|---|---|---|---|---|
| | | 14BDO | 15PDO | 16HDO | | Hydroxyl value (mgKOH/g) | Molecular weight (g/mol) | APHA | Amount (%) of ether linkage | Terminal primary OH purity (%) | Amount (ppm) of remaining metal M1 | Amount (ppm) of remaining metal M2 | |
| Example 38 | $Mn(OAc)_2 \cdot 4H_2O$/ Li-OMe | | | 355 | 73 | 55.6 | 2018 | 20 | 1.2 | 99.5 | 7.6 | 3.6 | PC1 |
| Example 39 | $Mn(OAc)_2 \cdot 4H_2O$/ Li-OMe | 270 | | | 75 | 56.3 | 1993 | 20 | 1.5 | 99.2 | 8.5 | 4.2 | PC2 |
| Example 40 | $Mn(OAc)_2 \cdot 4H_2O$/ Li-OMe | 135 | | 177 | 76 | 55.9 | 2008 | 30 | 1.3 | 99.6 | 8.1 | 3.9 | PC3 |
| Example 41 | $Mn(OAc)_2 \cdot 4H_2O$/ Li-OMe | | 156 | 177 | 75 | 55.5 | 2022 | 20 | 1.1 | 99.2 | 7.8 | 3.5 | PC4 |
| Example 42 | $Mn(OAc)_2 \cdot 4H_2O$/ Li-OMe | | 156 | 177 | 76 | 110.6 | 1015 | 20 | 1.6 | 99.1 | 7.4 | 3.6 | PC5 |
| Example 43 | $Mn(OAc)_2 \cdot 4H_2O$/ Li-OMe | | 156 | 177 | 75 | 37.6 | 2985 | 30 | 1.4 | 99.2 | 8.3 | 3.9 | PC6 |
| Comparative Example 8 | $Mn(OAc)_2 \cdot 4H_2O$ | | 156 | 177 | 28 | 55.9 | 2008 | 60 | 5.2 | 95.2 | 7.5 | 0 | PC7 |
| Comparative Example 9 | Li-OMe | | 156 | 177 | 30 | 54.3 | 2067 | 70 | 5.6 | 95.5 | 0 | 3.8 | PC8 |

(continued)

| | Type of catalyst | Mass (g) of dihydroxy compound | | | Carbonate conversion (%) after 2 hours from reaction initiation | Properties of polycarbonate diol | | | | | | | Polycarbonate diol obtained |
|---|---|---|---|---|---|---|---|---|---|---|---|---|---|
| | | 14BDO | 15PDO | 16HDO | | Hydroxyl value (mgKOH/g) | Molecular weight (g/mol) | APHA | Amount (%) of ether linkage | Terminal primary OH purity (%) | Amount (ppm) of remaining metal M1 | Amount (ppm) of remaining metal M2 | |
| Comparative Example 10 | Li-OMe | | 156 | 177 | 48 | 56.9 | 1972 | 150 | 18.3 | 93.2 | 0 | 18.9 | PC9 |

[Example 44]

A 200-mL separable flask equipped with a stirring blade, warmed in an oil bath at 60°C and sealed under nitrogen, was loaded with 15.7 g of diphenylmethane-4,4'-diisocyanate (hereinafter, also designated as "MDI"), 180 mL of N,N-dimethylformamide (hereinafter, also designated as "DMF") as a solvent, and 0.003 g of dibutyl tin dilaurate as a catalyst, and a solution of 42 g of polycarbonate diol PC1 in 60 g of DMF, warmed to 60°C in advance, was dropped thereinto with a dropping furnace over about 1 hour, thereby obtaining a solution. The solution obtained was continued to be stirred for 1 hour, and thereafter 3.2 g of 1,4-butanediol (hereinafter, also designated as "14BDO") was added. After the solution was stirred at 60°C for additional 3 hours, 1 g of ethyl alcohol was added to stop the reaction. The resulting polyurethane solution was applied onto a polypropylene resin sheet (width 100 mm, length 1200 mm, thickness 1 mm) with an applicator so that the width was 80 mm, the length was 100 mm and the thickness was 0.6 mm, and thus a coating film was obtained. The coating film obtained was dried on a hot plate having a surface temperature of 60°C, for 2 hours, and subsequently dried in an oven at 100°C for 12 hours. Furthermore, the coating film was left to still stand under a constant temperature of 23°C and a constant humidity of 55% RH for 48 hours or more, and thus a polyurethane film was obtained. The polyurethane film obtained was subjected to evaluations of various physical properties. The evaluation results were shown in Table 6.

[Examples 45 to 49 and Comparative Examples 11 to 13]

Each polyurethane film was obtained in the same manner as in Example 44 except that PC2 to PC9 were each used as the polycarbonate diol and the amounts of MDI and 14BDO were amounts shown in Table 6. The polyurethane films obtained were subjected to evaluations of various physical properties. The evaluation results were shown in Table 6.

[Table 6]

| | Example 44 | Example 45 | Example 46 | Example 47 | Example 48 | Example 49 | Comparative Example 11 | Comparative Example 12 | Comparative Example 13 |
|---|---|---|---|---|---|---|---|---|---|
| Polycarbonate diol | PC1 | PC2 | PC3 | PC4 | PC5 | PC6 | PC7 | PC8 | PC9 |
| Mass (g) of MDI | 15.7 | 15.7 | 15.7 | 15.7 | 31.4 | 10.5 | 15.7 | 15.7 | 15.7 |
| Mass (g) of 14BDO | 3.2 | 3.2 | 3.2 | 3.2 | 6.4 | 2.1 | 3.2 | 3.2 | 3.2 |
| Number average molecular weight Mn of polyurethane | 91000 | 93000 | 89000 | 86000 | 89000 | 85000 | 53000 | 54000 | 51000 |
| <Physical properties of polyurethane> | | | | | | | | | |
| Strength at breaking (MPa) | 22.6 | 26.3 | 25.9 | 25.8 | 21.3 | 18.9 | 14.2 | 13.6 | 10.2 |
| Elongation at breaking (%) | 750 | 680 | 780 | 880 | 650 | 900 | 560 | 600 | 510 |
| 100% Modulus (MPa) | 4.1 | 4.7 | 3.8 | 3.3 | 6.4 | 3.1 | 3.4 | 3.0 | 2.7 |
| Oleic acid resistance Mass change rate (%) | 17 | 10 | 13 | 15 | 11 | 14 | 28 | 25 | 31 |
| Heat resistance Breaking strength retention rate (%) | 96 | 93 | 97 | 98 | 94 | 97 | 77 | 76 | 61 |
| Hydrolysis resistance Breaking strength retention rate (%) | 97 | 96 | 96 | 98 | 95 | 96 | 72 | 65 | 56 |

The present application is based on Japanese

Patent Application (Japanese Patent Application No. 2022-005675) filed on January 18, 2022 and Japanese Patent Application (Japanese Patent Application No. 2022-109959) filed on July 7, 2022, the contents of which are herein incorporated by reference.

## Claims

1. A method for producing a polycarbonate diol, comprising a step of obtaining a polycarbonate diol with polycondensation by transesterification reaction of a dihydroxy compound and a carbonate ester as starting material monomers in the presence of a transesterification catalyst, wherein
the transesterification catalyst comprises a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.

2. The method for producing the polycarbonate diol according to claim 1, wherein the transesterification catalyst A1 corresponds to at least one metal complex represented by the following formula (1) and/or a hydrate thereof:

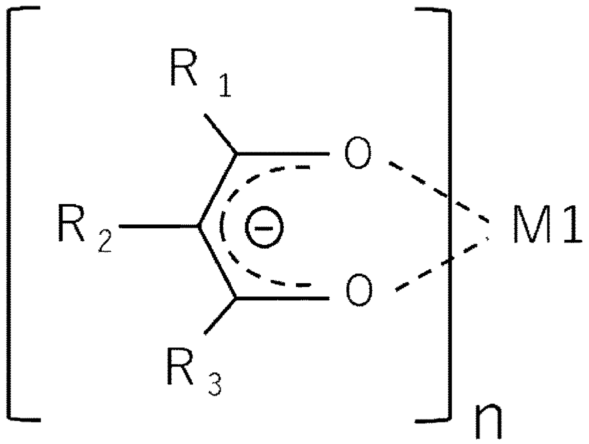

(1)

wherein $R_1$ and $R_3$ each independently represent a monovalent hydrocarbon group having 1 to 10 carbon atoms, the hydrocarbon groups of $R_1$ and $R_3$ are each optionally substituted with a halogen atom or each optionally have an oxygen atom, $R_2$ represents hydrogen, or a monovalent hydrocarbon group having 1 to 10 carbon atoms, the hydrocarbon group of $R_2$ is optionally substituted with a halogen atom or optionally has an oxygen atom, M1 represents at least one metal selected from the group consisting of metals in Group 6, Group 7, Group 8, Group 9, Group 10 and Group 11 in the long-period type periodic table, n is 1, 2 or 3, and the metal complex represented by the formula (1) is optionally an associated product of a plurality of such metal complexes.

3. The method for producing the polycarbonate diol according to claim 1, wherein the transesterification catalyst A1 corresponds to a salt of at least one carboxylic acid represented by the following formula (2) and at least one metal (M1) selected from the group consisting of metals in Group 6, Group 7, Group 8, Group 9, Group 10 and Group 11 in the long-period type periodic table, and/or a hydrate thereof:

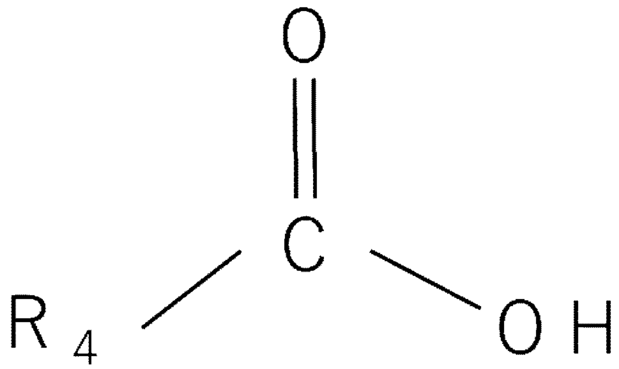

(2)

wherein $R_4$ represents a monovalent hydrocarbon group having 1 to 20 carbon atoms, and the hydrocarbon group of $R_4$ is optionally substituted with a halogen atom or optionally has an oxygen atom.

**4.** The method for producing the polycarbonate diol according to any one of claims 1 to 3, wherein the metal (M1) is at least one metal selected from the group consisting of molybdenum, manganese, iron, cobalt, nickel and copper.

**5.** The method for producing the polycarbonate diol according to any one of claims 1 to 3, wherein the metal (M1) is manganese.

**6.** The method for producing the polycarbonate diol according to any one of claims 1 to 3, wherein the transesterification catalyst A2 is an alcoholate of at least one alcohol represented by the following formula (3) and at least one metal (M2) selected from the group consisting of metals in Group 1 and Group 4 in the long-period type periodic table:

$R_5$-OH (3)

wherein $R_5$ represents a monovalent hydrocarbon group having 1 to 20 carbon atoms, and the hydrocarbon group of $R_5$ is optionally substituted with a halogen atom or optionally has an oxygen atom.

**7.** The method for producing the polycarbonate diol according to any one of claims 1 to 3, wherein the metal (M2) is at least one metal selected from the group consisting of lithium, sodium, potassium, titanium, zirconium and hafnium.

**8.** The method for producing the polycarbonate diol according to any one of claims 1 to 3, wherein the metal (M2) is lithium.

**9.** The method for producing the polycarbonate diol according to any one of claims 1 to 3, wherein an amount of the transesterification catalyst A1 is 0.5 ppm or more and 20 ppm or less in terms of the total amount of the metal (M1) based on the total amount of the whole dihydroxy compound and carbonate ester, and an amount of the transesterification catalyst A2 is 0.25 ppm or more and 10 ppm or less in terms of the total amount of the metal (M2) based on the total amount of the whole dihydroxy compound and carbonate ester.

**10.** The method for producing the polycarbonate diol according to any one of claims 1 to 3, wherein the dihydroxy compound comprises at least one of an aliphatic dihydroxy compound and an alicyclic dihydroxy compound of any structure represented by the following formula (4):

HO-$R_6$-OH (4)

wherein $R_6$ represents a divalent aliphatic or alicyclic hydrocarbon group having 2 to 20 carbon atoms.

**11.** The method for producing the polycarbonate diol according to any one of claims 1 to 3, wherein the carbonate ester is at least one selected from the group consisting of alkylene carbonate, dialkyl carbonate and diaryl carbonate.

**12.** A polycarbonate diol satisfying the following formula (A):

HO-R(OC=OOR)m-OH (A)

wherein R represents a divalent aliphatic hydrocarbon group or alicyclic hydrocarbon group having 2 to 20 carbon atoms, and m is an integer of 2 or more and 600 or less;

wherein the polycarbonate diol
has a number average molecular weight of 250 or more and 100000 or less,
contains at least one metal (M1) selected from the group consisting of metals in Group 6, Group 7, Group 8, Group 9, Group 10 and Group 11 in the long-period type periodic table in a total amount of 1 ppm or more and 25 ppm or less and
contains at least one metal (M2) selected from the group consisting of metals in Group 1 and Group 4 in the long-period type periodic table in a total amount of 0.5 ppm or more and 12.5 ppm or less,
has a Hazen color index measured according to JIS-K0071-1 (1998) of 50 or less,
has an amount of ether linkage of 5% by mol or less, and
has a terminal primary hydroxyl group (OH) purity of 97% or more.

**13.** The polycarbonate diol according to claim 12, wherein the polycarbonate diol is a polycondensation product by transesterification reaction of a dihydroxy compound and a carbonate ester.

**14.** The polycarbonate diol according to claim 12 or 13, wherein the metal (M1) is at least one metal selected from the group consisting of molybdenum, manganese, iron, cobalt, nickel and copper, and the metal (M2) is at least one metal selected from the group consisting of lithium, sodium, potassium, titanium, zirconium and hafnium.

**15.** The polycarbonate diol according to claim 12 or 13, wherein the metal (M1) is manganese and the metal (M2) is lithium.

**16.** A polyurethane comprising the polycarbonate diol according to claim 12 or 13.

**17.** A transesterification catalyst comprising at least two transesterification catalysts of a transesterification catalyst A1 containing at least one metal (M1) selected from the group consisting of metals in Group 6, Group 7, Group 8, Group 9, Group 10 and Group 11 in the long-period type periodic table and a transesterification catalyst A2 containing at least one metal (M2) selected from the group consisting of metals in Group 1 and Group 4 in the long-period type periodic table.

**18.** The transesterification catalyst according to claim 17, wherein the transesterification catalyst A1 is at least one metal complex represented by the following formula (1) and/or a hydrate thereof:

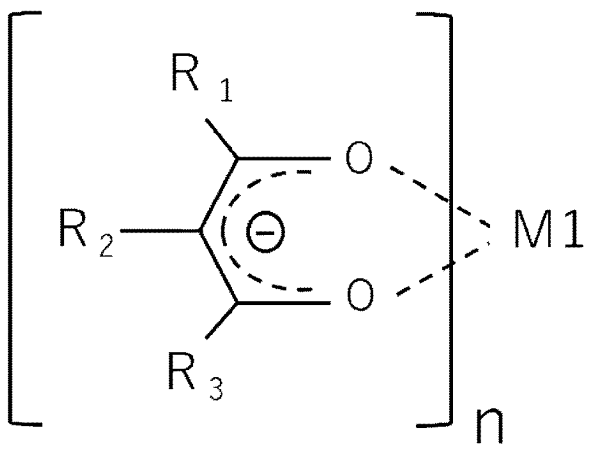

(1)

wherein $R_1$ and $R_3$ each independently represent a monovalent hydrocarbon group having 1 to 10 carbon atoms, the hydrocarbon groups of $R_1$ and $R_3$ are each optionally substituted with a halogen atom or each optionally have an oxygen atom, $R_2$ represents hydrogen, or a monovalent hydrocarbon group having 1 to 10 carbon atoms, the hydrocarbon group of $R_2$ is optionally substituted with a halogen atom or optionally has an oxygen atom, M1 represents at least one metal selected from the group consisting of metals in Group 6, Group 7, Group 8, Group 9, Group 10 and Group 11 in the long-period type periodic table, n is 1, 2 or 3, and the metal complex represented by the formula (1) is optionally an associated product of a plurality of such metal complexes.

**19.** The transesterification catalyst according to claim 17, wherein the transesterification catalyst A1 corresponds to a salt of at least one carboxylic acid represented by the following formula (2) and at least one metal (M1) selected from the group consisting of metals in Group 6, Group 7, Group 8, Group 9, Group 10 and Group 11 in the long-period type periodic table, and/or a hydrate thereof:

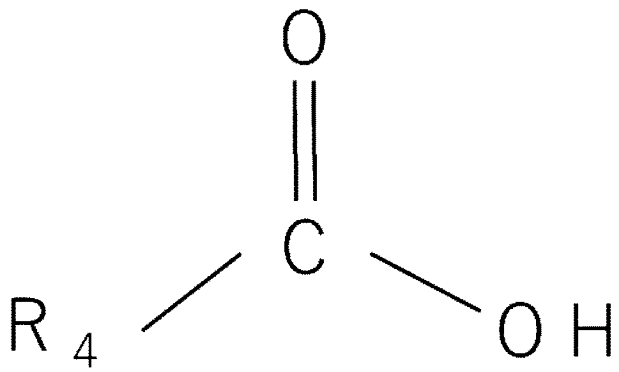

(2)

wherein $R_4$ represents a monovalent hydrocarbon group having 1 to 20 carbon atoms, and the hydrocarbon group of $R_4$ is optionally substituted with a halogen atom or optionally has an oxygen atom.

**20.** The transesterification catalyst according to any one of claims 17 to 19, wherein the metal (M1) is at least one metal selected from the group consisting of molybdenum, manganese, iron, cobalt, nickel and copper.

**21.** The transesterification catalyst according to any one of claims 17 to 19, wherein the metal (M1) is manganese.

**22.** The transesterification catalyst according to any one of claims 17 to 19, wherein the transesterification catalyst A2 is an alcoholate of at least one alcohol represented by the following formula (3) and at least one metal (M2) selected from the group consisting of metals in Group 1 and Group 4 in the long-period type periodic table:

$R_5$-OH (3)

wherein $R_5$ represents a monovalent hydrocarbon group having 1 to 20 carbon atoms, and the hydrocarbon group of $R_5$ is optionally substituted with a halogen atom or optionally has an oxygen atom.

**23.** The transesterification catalyst according to any one of claims 17 to 19, wherein the metal (M2) is at least one metal selected from the group consisting of lithium, sodium, potassium, titanium, zirconium and hafnium.

**24.** The transesterification catalyst according to any one of claims 17 to 19, wherein the metal (M2) is lithium.

## INTERNATIONAL SEARCH REPORT

International application No.
**PCT/JP2023/001174**

**A. CLASSIFICATION OF SUBJECT MATTER**

***C08G 64/30***(2006.01)i; ***C08G 18/44***(2006.01)i; *B01J 31/26*(2006.01)n
FI: C08G64/30; C08G18/44; B01J31/26 Z

According to International Patent Classification (IPC) or to both national classification and IPC

**B. FIELDS SEARCHED**

Minimum documentation searched (classification system followed by classification symbols)

C08G64/20-38; C08G18/44; B01J31/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 5519108 A (INDUSTRIAL TECHNOLOGY RESEARCH INSTITUTE) 21 May 1996 (1996-05-21) claims, column 4, line 30 to column 6, line 60, examples 1-19 | 17, 19-23 |
| A | | 1-16, 18, 24 |
| X | JP 2009-235291 A (UBE INDUSTRIES, LTD.) 15 October 2009 (2009-10-15) claims, paragraphs [0016], [0019]-[0024], [0029]-[0037] | 1-11, 17-24 |
| Y | | 2-11, 18-24 |
| A | | 12-16 |
| X | JP 2021-75717 A (ASAHI KASEI CORP.) 20 May 2021 (2021-05-20) claims, paragraphs [0088], [0126], [0141]-[0155], [0232]-[0282] | 1, 4-11, 17, 20-24 |
| Y | claims, paragraphs [0088], [0126], [0141]-[0155], [0232]-[0282] | 2-11, 18-24 |
| A | | 12-16 |
| A | JP 2013-10950 A (MITSUBISHI CHEMICAL CORP.) 17 January 2013 (2013-01-17) | 1-24 |
| A | JP 2013-533861 A (ECOSYNTH BVBA) 29 August 2013 (2013-08-29) | 1-24 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/001174**

| Patent document cited in search report | Publication date (day/month/year) | Patent family member(s) | Publication date (day/month/year) |
|---|---|---|---|
| US 5519108 A | 21 May 1996 | (Family: none) | |
| JP 2009-235291 A | 15 October 2009 | (Family: none) | |
| JP 2021-75717 A | 20 May 2021 | EP 3819322 A1<br>claims, paragraphs [0072], [0110], [0125]-[0139], [0216]-[0268]<br>CN 112778888 A | |
| JP 2013-10950 A | 17 January 2013 | JP 2017-36463 A | |
| JP 2013-533861 A | 29 August 2013 | US 2013/0090492 A1<br>WO 2011/157645 A2<br>CN 103140287 A<br>MX 2012014722 A<br>KR 10-2014-0002591 A<br>RS 55808 B<br>BR 112012031918 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000095836 A
- JP 2001123112 A
- JP H0551428 A
- JP H0649166 A
- WO 2002070584 A
- JP H02289616 A
- JP 2012046659 A
- WO 2006088152 A
- JP S51144492 A
- JP 2013010950 A
- JP 2020125467 A
- JP 2022005675 A
- JP 2022109959 A

### Non-patent literature cited in the description

- **KATSUJI MATSUNAGA**. Basic and Application of Polyurethane. CMC Publishing Co., Ltd., November 2006, 96-106